# EUROPEAN PATENT APPLICATION

(11) **EP 4 621 985 A1**
(43) Date of publication of application: **24.09.2025**
(21) Application number: 23890712.5
(22) Date of filing: 11.11.2023
(51) Int. Cl.: H01M 50/673, H01M 10/613, H01M 50/258

(54) **BATTERY PACK AND ENERGY STORAGE DEVICE**

(30) Priority: 15.11.2022 CN 202223024933 U; 04.02.2023 CN 202320109394 U; 04.02.2023 CN 202320109408 U
(71) Applicant: D-Aus Energy Storage Technology (Xi'an) Co., Ltd, Xi' An, Shaanxi 710075 (CN)
(72) Inventor: LEI, Zhengjun, Xi'an, Shaanxi 710075 (CN); CHEN, Mengqi, Xi'an, Shaanxi 710075 (CN); ZHANG, Sanxue, Xi'an, Shaanxi 710075 (CN); HAN, Xiaoyu, Xi'an, Shaanxi 710075 (CN)
(74) Representative: Zacco GmbH
(86) International application number: PCT/CN2023/131137
(87) International publication number: WO 2024/104278

(57) **Abstract**

Disclosed in an embodiment are a battery pack and an energy storage device. The battery pack comprises a fixing assembly, a shared pipeline assembly, a heat exchange assembly, and a plurality of prismatic cells. The plurality of prismatic cells are connected in parallel. The fixing assembly is configured to fixedly connect the plurality of prismatic cells side by side to form the battery pack. The shared pipeline assembly is configured to communicate all inner cavities of the plurality of prismatic cells, so that all the prismatic cells in the battery pack are in one electrolyte system. The heat exchange assembly is configured to be fixedly connected to electrode terminals on the same sides of the plurality of prismatic cells, to achieve heat exchange between all the prismatic cells in the battery pack and the outside. This application can enhance uniformity of electrolytes in the prismatic cells in the battery pack, prolong a cycle life, replenish an electrolyte for the battery pack through the shared pipeline assembly, prolong the service life of the battery pack, and also improve safety in use of the battery pack.

## Description

### Technical Field

The disclosure relates to the technical field of energy storage, and in particular relates to a battery pack and an energy storage device.

### Background

On the market today, cylindrical cells, prismatic cells, and pouch cells are generally connected in parallel or series to form a battery pack. CN208078069U discloses a battery cell assembly and a battery pack, and the battery cell assembly includes a plurality of battery cells, a conductive tape, a first tab, and a second tab, where the plurality of battery cells are arranged side by side, the conductive tape is connected to the plurality of battery cells to connect two spaced or adjacent cells in series, the first tab and the second tab are arranged on the same sides of the plurality of battery cells arranged side by side, the first tab is connected to one battery cell through the conductive tape, and the second tab is connected to the other battery cell through the conductive tape.

However, the above-mentioned battery pack still has the following disadvantages: after a period of use, the electrolytes in the battery cells have certain differences, and the battery cell with the least electrolyte or the least effective components will become a short plank in the buckets effect, affecting the overall life of the battery pack. The problem of poor uniformity of electrolytes will cause inconsistent internal resistance among the battery cells, which in turn will lead to inconsistent heat generation among the battery cells and lead to a safety hazard. To solve the problem of inconsistent heat generation in a battery pack, an existing heat dissipation manner for the battery pack is to provide a liquid cooling circulating pipeline to dissipate heat from the battery pack. However, in practical use, it was found that due to the inconsistent heat generation of battery cells, when the existing heat dissipation manner is used, a flow path or flow area of a liquid cooling medium in the liquid cooling circulating pipeline needs to be increased to ensure the heat dissipation effect. However, such a heat dissipation manner can lead to problems such as large battery pack volume, complex production and assembly, numerous supporting devices, and high cost.

Therefore, how to decrease adverse effects caused by the buckets effect to ensure consistency of battery cells in existing battery packs, and solve the problems such as large volume, complex structure, and high production cost of the battery packs caused by an existing liquid cooling heat dissipation manner, is currently an urgent problem to be solved.

### Summary

To decrease adverse effects caused by the bucket effect to ensure consistency of battery cells in existing battery packs, and solve the problems of large volume, complex structure, and high production cost of the battery packs caused by an existing liquid cooling heat dissipation manner, the disclosure provides a technical solution of providing a battery pack and an energy storage device.

The battery pack of the disclosure includes a fixing assembly, a shared pipeline assembly, a heat exchange assembly, and a prismatic cell, wherein a plurality of prismatic cells are provided. The plurality of prismatic cells are connected in parallel. The fixing assembly is configured to fixedly connect the plurality of prismatic cells side by side to form the battery pack. The shared pipeline assembly is configured to communicate all inner cavities of the plurality of prismatic cells, so that all the prismatic cells of the plurality of prismatic cells in the battery pack are in one electrolyte system. The heat exchange assembly is configured to be fixedly connected to electrode terminals on the same sides of the plurality of prismatic cells, to achieve heat exchange between all the prismatic cells of the plurality of prismatic cells in the battery pack and the outside. Some embodiments of the disclosure, the plurality of prismatic cells in the battery pack are connected in parallel and fixed by the fixing assembly to form the battery pack. By means of the shared pipeline assembly, all the prismatic cells in the battery pack are in the same electrolyte system, thereby decreasing adverse effects caused by the bucket effect, ensuring uniformity of electrolytes in the plurality of prismatic cells in the battery pack, and prolonging a cycle life. Also, the improvement of uniformity also reduces the difference in heat generation among the battery cells, so that the battery cells may substantially maintain balanced heat generation, and the probability of thermal runaway caused by excessive heat generation of specific cells is reduced. In addition, an electrolyte is able to be replenished for the battery pack through the shared pipeline assembly, thereby further prolonging a service life of the battery pack.

In some embodiments, since the battery cells substantially maintain a balanced heat generation state, the disclosure provides the heat exchange assembly to be connected to the electrode terminals of the battery cells to conduct heat of the electrode terminals, i.e., the most concentrated heat, on the battery cells to the outside for heat dissipation. Such a heat dissipation manner not only achieves balanced heat dissipation for the battery cells in the battery pack and improves the safety in use of the battery pack, but also has a simple structure which is easy to produce and assemble and has a low production cost.

In some embodiments, the shared pipeline assembly includes an electrolyte injection pipeline, and the prismatic cell includes an electrolyte injection channel. The electrolyte injection channel is provided with a sealing mechanism. Each prismatic cell is communicated with the electrolyte injection pipeline through the electrolyte injection channel. One end of the electrolyte injection pipeline is used as a main electrolyte injection port, and the other end of the electrolyte injection pipeline is closed. The sealing mechanism is configured to seal the electrolyte injection channel, and the sealing mechanism dissolves when encountering an electrolyte or forms an opening under an external force, to make the electrolyte injection channel be communicated and communicate the electrolyte injection pipeline with an electrolyte cavity of the prismatic cell. The electrolyte injection pipeline and the sealing mechanism keep an electrode assembly in each prismatic cell from coming into contact with air before a shared electrolyte system is formed in the battery pack. Before the battery pack is formed, each prismatic cell may be graded, and the prismatic cells with good consistency are configured to form the battery pack. When the battery pack is formed, the sealing mechanism is removed when an electrolyte needs to be injected, and then the electrolyte is injected uniformly, thereby improving the performance of the battery pack.

In some embodiments, the electrolyte injection pipeline includes a collecting pipe and a connecting pipe, wherein a plurality of collecting pipes and a plurality of connecting pipes are provided. The prismatic cell comprises a prismatic cell case, wherein a plurality of prismatic cell cases are provided. The plurality of collecting pipes are arranged on the plurality of prismatic cell cases respectively, and each collecting pipe of the plurality of collecting pipes is laid along the thickness or width direction of the prismatic cell case. The collecting pipes on two adjacent prismatic cells are connected by one connecting pipe. Due to the collecting pipe being integrated with the case and connected by the connecting pipe, the case of the prismatic cell and the battery pack formed thereby are simple and convenient to process, economical and practical, and have a good sealing effect.

In some embodiments, a connecting nozzle is arranged at an end of the connecting pipe, two ends of the connecting pipe are provided the connecting nozzles, a connecting port is formed at an end of the collecting pipe, the connecting ports are formed at two ends of the collecting pipe, and the connecting nozzles are embedded in the connecting ports for sealed connection; or, two ends of the connecting pipe include connecting ports, two ends of the collecting pipe are provided with connecting nozzles, and the connecting nozzles are embedded in the connecting ports for sealed connection. The connecting nozzles and the connecting ports make the collecting pipes and the connecting pipes simpler and more convenient to connect, and may also make the prismatic cells arranged tightly, thereby reducing the volume of the battery pack.

In some embodiments, the connecting nozzle is a conical nozzle, and the connecting nozzle is in interference fit with the connecting port; or, the connecting nozzle is in threaded connection with the connecting port. The conical nozzle may better connect with the connecting port, the interference fit may improve the airtightness of the shared pipeline assembly, and the threaded connection is convenient for mounting and has low cost and good airtightness.

In some embodiments, the main electrolyte injection port of the electrolyte injection pipeline is provided with a detachable explosion venting mechanism, and a closed end of the electrolyte injection pipeline is sealed with a blocking member. By means of the explosion venting mechanism, the shared pipeline assembly is also used as an explosion venting channel. When any prismatic cell experiences thermal runaway, an electrolyte channel is shared as the explosion venting channel, and thermal runaway smoke is discharged by the explosion venting mechanism.

In some embodiments, the sealing mechanism is a sealing sheet provided with a traction ring, and the traction ring pulls apart the sealing sheet under the traction of an external force to form an opening. Or, the sealing mechanism is a sealing film to which a protective film is attached, the sealing film is soluble in an electrolyte, the protective film is insoluble in the electrolyte, the protective film is attached to one side of the sealing film facing the inner cavity of the prismatic cell, and after the sealing film dissolves in the electrolyte, the protective film falls off. The sealing mechanism may be opened by an external force or through dissolution in an electrolyte, and both manners may meet the requirements of steps including assembly, formation, and grading in the production of a single prismatic cell. The sealing mechanism is convenient and simple to open when a battery pack is formed.

In some embodiments, the heat exchange assembly includes a heat transfer pipe, a slot is formed in the electrode terminal, and the heat transfer pipe is fixed in the slot. The electrode terminal is the most apparent part of heat generation of the prismatic cell. By means of the slot formed in the electrode terminal and the heat transfer pipe arranged in the slot, the heat of the electrode terminal may be effectively reduced by a temperature control device, and a battery pack may also be heated when the temperature of the battery pack is low, thereby improving the safety and operational stability of the battery pack.

In some embodiments, a cross section of the slot is C-shaped or U-shaped. A ratio of the diameter of the heat transfer pipe to a width of the widest part of the slot is (1:1.05) to (1:1.1); and a ratio of a length of the slot to a width of an upper cover plate of the prismatic cell is (0.7:1) to (0.9:1). The radians formed at two ends of the C-shaped slot have natural tension, and are favorable for tightly clamping the heat transfer pipe in the slot. The opening width of the U-shaped slot is relatively close to the widest part of the slot, which is convenient for placing the heat transfer pipe, and is able to provide a sufficient operating space for flattening or more tightly attaching the heat transfer pipe to the slot using a special tool.

In some embodiments, the prismatic cell case includes an upper cover plate, a lower cover plate, and a barrel. The electrode terminal is arranged on the upper cover plate in an insulated manner. The lower cover plate and the collecting pipe are integrally formed aluminum extrusion parts. The barrel is an aluminum extrusion part, and the lower cover plate is fixed to the barrel by laser welding. An extrusion process has low cost and a welding fixing process has good sealing effect.

In some embodiments, the fixing assembly is a fixing case, and the plurality of prismatic cells are fixedly arranged side by side in the fixing case. Or, the fixing assembly includes a first assembly member and a second assembly member. The first assembly member is fixedly connected to a side wall of a barrel of the prismatic cell and is configured to fix the plurality of prismatic cells arranged side by side as a whole. The second assembly member is positioned below the plurality of prismatic cells arranged side by side and is fixedly connected to the lower cover plate of the prismatic cell.

Also, the disclosure provides an energy storage device. The energy storage device includes a box, a fixing frame, a temperature control apparatus, a battery management system (BMS), and a battery pack, wherein at least two battery packs are provided. The fixing frame is arranged in the box, and the at least two battery packs are connected in series and fixed onto the fixing frame. The battery pack includes a fixing assembly, a heat exchange assembly, a shared pipeline assembly, and a plurality of prismatic cells. The fixing assembly fixedly connects the plurality of prismatic cells as a whole, and the plurality of prismatic cells are arranged in parallel. The shared pipeline assembly is configured to communicate all inner cavities of the plurality of prismatic cells, so that all prismatic cells of the plurality of prismatic cells in the battery pack are in one electrolyte system. The heat exchange assembly is configured to achieve heat exchange between the battery pack and the temperature control apparatus. The temperature control apparatus is arranged outside the box and configured to heat or cool each battery pack via the heat exchange assembly. The BMS is configured to manage the at least two battery packs, and includes a BMS host and a BMS slave, wherein a plurality of BMS slaves are provided, the plurality of BMS slaves of which the number is the same as that of the at least two battery packs. The plurality of BMS slaves are arranged on the at least two battery packs respectively, and the BMS host is in communication with all the plurality of BMS slaves.

The disclosure achieves heat exchange of the prismatic cell and the battery pack by providing the battery pack of the energy storage device with the heat exchange assembly which is connected to the electrode terminal that generates the most heat in each prismatic cell. Also, the temperature control apparatus arranged outside the box not only ensures the uniformity of heating or cooling of each prismatic cell in the battery pack, but also directly conducts the heat out of the prismatic cell with a higher temperature, thereby improving the heat dissipation performance of the prismatic cell and the battery pack. When the energy storage device is in extremely cold conditions and the prismatic cell in the battery pack cannot start normally, the temperature control apparatus is able to also be used to transfer heat to the heat exchange assembly for automatically heating the prismatic cell in each battery pack.

In some embodiments, the battery pack is also provided with an electrical connector, wherein two electrical connectors are provided. One electrical connector is electrically connected to all positive electrode terminals of the plurality of prismatic cells on the battery pack, and the other electrical connector is connected to all negative electrode terminals of the plurality of prismatic cells on the battery pack. The electrical connector connected to the positive electrode terminals on one battery pack is connected to the electrical connector connected to the negative electrode terminals on the adjacent another battery pack, to connect the two adjacent battery packs in series. By means of the electrical connectors, in all the prismatic cells, positive electrodes are connected uniformly and negative electrodes are connected uniformly, so that parallel connection between the prismatic cells forming the battery packs is achieved, the structure is simple, and the effect is good.

In some embodiments, the electrical connector includes a first connecting portion and a second connecting portion. The first connecting portion is electrically connected to all positive or negative electrode terminals on one battery pack, and the second connecting portion is electrically connected to the second connecting portion of the electrical connector on the adjacent another battery pack, to connect the two adjacent battery packs in series. The first connecting portion and the second connecting portion further refine functional areas of the electrical connector. The first connecting portion is configured to connect all the prismatic cells in parallel, and the second connecting portion achieves series connection between the battery packs. Therefore, a connecting structure between the battery packs is simplified, a current carrying area of electric connection between the battery packs is increased, a connecting apparatus arranged between the battery packs separately is saved, the structure is simple, and the effect is good.

In some embodiments, the electrical connector includes a buffer groove, and the buffer groove is formed on one side of the first connecting portion near the second connecting portion. By means of the buffer groove, the battery packs may be connected in series more easily by slightly adjusting the positions thereof when the placement positions of the battery packs have a slight error, thereby avoiding repeated movement of the battery packs, and providing a buffer space for slight displacement during transportation.

As one of the core components of the disclosure, the heat exchange assembly is arranged in many specific manners. Considering the heat exchange efficiency and reasonable matching with other components, the disclosure provides the following two manners:
A first type of heat exchange assembly includes a primary heat exchange pipe, and heat exchange between the battery pack and the temperature control apparatus is achieved by the primary heat exchange pipe. The specific connection relationship is as follows: first portion of the primary heat exchange pipe is connected to all positive or negative electrode terminals on the battery pack, second portion is connected to the temperature control apparatus, and the primary heat exchange pipe is kept insulated from the temperature control apparatus. The primary heat exchange pipe is kept insulted from the temperature control apparatus in the following several manners: first, the primary heat exchange pipe is insulated from the positive and negative electrode terminals respectively; second, the primary heat exchange pipe is insulated from the temperature control apparatus; and third, the primary heat exchange pipe is made of an insulation material. In the first type of heat exchange assembly, the primary heat exchange pipe may achieve heat exchange by filling an insulation plastic pipe with a liquid medium such as water. Although insulation is ensured, the insulation plastic pipe has an unsatisfactory heat transfer effect, also a possible risk of liquid leakage, and poor safety. Therefore, to ensure the heat exchange effect, the first type of heat exchange assembly uses heat pipe as the primary heat exchange pipe. To ensure insulation during use, insulating films may be arranged between the primary heat exchange pipe and the positive and negative electrode terminals respectively, or insulating films may be arranged at the connection position between the primary heat exchange pipe and the temperature control apparatus.

It should be noted that to ensure the heat transfer effect while saving costs, the temperature control apparatus provided for the first type of heat exchange assembly using the heat pipe is a thermo electric cooler (TEC) (i.e., a semiconductor cooler). However, due to the characteristics of the heat pipe, the length of the heat pipe is limited (i.e., the distance between two main bodies of heat exchange is limited), and also, due to limited cooling and heating abilities of the TEC, the first type of heat exchange assembly that uses the heat pipes as the primary heat exchange pipes is suitable for scenarios where relatively few battery packs are used in an energy storage device, or where the box volume in an energy storage device is small.

A second type of heat exchange assembly is based on a two-stage heat exchange mechanism. A specific structure of the second type of heat exchange assembly includes a primary heat exchange pipe, a secondary heat exchange pipe, and an insulation heat exchange members. First portion of the primary heat exchange pipe is connected to all positive or negative electrode terminals on the battery pack, second portion of the primary heat exchange pipe perform insulation heat exchange with first portion of the secondary heat exchange pipe via the insulation heat exchange members, and second portion of the secondary heat exchange pipe is connected to the temperature control apparatus. The insulation heat exchange member is provided with at least one first mounting portion and at least one second mounting portion. The first mounting portion is configured to mount the other portions of the primary heat exchange pipes, the second mounting portion is configured to mount one portion of the secondary heat exchange pipes, and the primary heat exchange pipes are kept insulated from the first mounting portion. Or, the secondary heat exchange pipes are kept insulated from the second mounting portion. Or the first mounting portion is kept insulated from the second mounting portion. In some embodiments, the first mounting portion and the second mounting portion are holes or slots.

To ensure the efficiency and safety of primary heat exchange, the heat pipes are used as the primary heat exchange pipes, and heat pipes or aluminum pipes filled with a liquid medium such as water (i.e., a liquid cooling pipe) to achieve heat exchange may also be used as the secondary heat exchange pipes. To meet the requirement for a sufficiently long heat exchange distance due to a large number of battery packs in an energy storage device and a large volume of a box of the energy storage device, the secondary heat exchange pipes provided in the disclosure need to use the liquid cooling pipes. Thus, the temperature control apparatus that performs heat exchange with the secondary heat exchange pipes also needs to use a liquid cooling manner adaptively.

Namely, when the second type of heat exchange assembly needs to simultaneously consider the multidimensional advantages of the insulation effect, the heat exchange effect, a long heat exchange distance, and suitability for a large number of battery packs, the primary heat exchange pipes in the second type of heat exchange assembly are the heat pipes, and the secondary heat exchange pipes are the liquid cooling pipes.

In some embodiments, a specific structure of the temperature control apparatus matched with the second type of heat exchange assembly is selected as follows: the temperature control apparatus includes a cooling and heating machine, a radiator, a circulating pump, and a control valve assembly. The cooling and heating machine is configured to actively heat or cool a medium in the secondary heat exchange pipe. A liquid inlet of the cooling and heating machine is connected to an outlet of the secondary heat exchange pipe through a first pipeline, and a liquid outlet of the cooling and heating machine is connected to an inlet of the secondary heat exchange pipe through a second pipeline. The radiator is connected to the first or second pipeline and used to passively cool the medium in the secondary heat exchange pipe. The circulating pump is arranged on the first or second pipeline and used to provide power for the medium in the secondary heat exchange pipe to flow. The control valve assembly is arranged on the first or second pipeline and used to control the cooling and heating machine to be communicated with the radiator to achieve passive cooling of the medium. Or, the control valve assembly controls the cooling and heating machine to be disconnected from the radiator, and the medium only flows into the cooling and heating machine to achieve active heating or active cooling.

In some embodiments, the control valve assembly includes a three-way electric valve. A first port of the three-way electric valve is communicated with the liquid inlet of the cooling and heating machine, a second port of the three-way electric valve is communicated with the first pipeline, and a third port of the three-way electric valve is communicated with an outlet of the radiator.

In some embodiments, the control valve assembly includes a first electric valve and a second electric valve. The first electric valve is arranged at the outlet of the radiator, and the second electric valve is arranged on the first pipeline. Or the first electric valve is arranged at an inlet of the radiator, and the second electric valve is arranged on the second pipeline.

In some embodiments, the temperature control apparatus further includes an electrical control box. The electrical control box is connected to the cooling and heating machine, the circulating pump, and the control valve assembly respectively, and configured to control the working state of the cooling and heating machine, the circulating pump, and the control valve assembly. The electrical control box is in communication with the BMS. The electrical control box may control the working state of the cooling and heating machine, the circulating pump, and the control valve assembly in time. Also, the electrical control box may operate the cooling and heating machine, the circulating pump, and the control valve assembly on site, and has the characteristic of convenient operation.

In addition, the embodiment further provides another energy storage device. The energy storage device includes a box, a fixing frame, a smoke treatment apparatus, a battery management system (BMS), and a battery pack, wherein at least two battery packs are provided. The fixing frame is arranged in the box, and the at least two battery packs are connected in series and fixed onto the fixing frame. The battery pack includes a fixing assembly, a shared pipeline assembly, and a plurality of prismatic cells. The fixing assembly fixedly connects the plurality of prismatic cells as a whole, and the plurality of prismatic cells are arranged in parallel. The shared pipeline assembly is configured to communicate all inner cavities of the plurality of prismatic cells, so that all prismatic cells of the plurality of prismatic cells in the battery pack are in one electrolyte system. The smoke treatment apparatus is connected to the shared pipeline assembly on each battery pack of the at least two battery packs, so that when any prismatic cell of the plurality of prismatic cells experiences thermal runaway, thermal runaway smoke is discharged through the shared pipeline assembly to the smoke treatment apparatus for treatment. The BMS is configured to manage the at least two battery packs, and includes a BMS host and a BMS slave, wherein a plurality of BMS slaves are provided, the plurality of BMS slaves of which the number is the same as that of the at least two battery packs. The plurality of BMS slaves are arranged on the at least two battery packs respectively, and the BMS host is in communication with all the plurality of BMS slaves.

The disclosure achieves that the prismatic cells in the battery pack are in the same electrolyte system by means of the shared pipeline assembly. Not only the prismatic cells are ensured to be always in dynamic equilibrium, but also the temperature of the prismatic cells in the same battery pack may be in a relatively balanced state in the same electrolyte system. Also, to some extent, the probability of thermal runaway caused by excessive heating of a certain prismatic cell due to a large temperature difference between the prismatic cell and other prismatic cells is avoided, and the safety of the energy storage device is improved. Also, by means of the smoke treatment apparatus of this apparatus, the thermal runaway smock is discharged to the smoke treatment apparatus for harmless treatment, and open flames may be prevented from in a box of the energy storage device. Compared with a fire protection system of an existing energy storage device, the problem that the entire fire protection system is started when a single battery pack loses control and catches fire, causing all battery packs in the box to be submerged in a fire extinguishing agent and damaging other normal cells, may be avoided.

It can be seen that the energy storage device of the disclosure reduces the probability of thermal runaway events at a front end through the shared pipeline assembly, and treats thermal runaway smoke reasonably and effectively at a back end through a joint action of the shared pipeline assembly and the smoke treatment apparatus, thereby greatly improving the safety of the energy storage device. In addition, the thermal runaway smoke is discharged to the smoke treatment apparatus for harmless treatment, which may prevent open flames in the box of the energy storage device, and further enhance the overall safety of the energy storage device. The smoke treatment apparatus further may avoid the problem that the entire fire protection system is started when a single battery pack loses control and catches fire, causing all battery packs in the box to be submerged in a fire extinguishing agent and damaging other normal cells.

In some embodiments, the battery pack is also provided with an electrical connector, wherein two electrical connectors are provided. One electrical connector is electrically connected to all positive electrode terminals of the plurality of prismatic cells on the battery pack, and the other electrical connector is connected to all negative electrode terminals of the plurality of prismatic cells on the battery pack. The electrical connector connected to the positive electrode terminals on one battery pack is connected to the electrical connector connected to the negative electrode terminals on the adjacent another battery pack, to connect the two adjacent battery packs in series.

In some embodiments, the electrical connector includes a first connecting portion and a second connecting portion. The first connecting portion is electrically connected to all positive or negative electrode terminals on one battery pack, and the second connecting portion is electrically connected to the second connecting portion of the electrical connector on the adjacent another battery pack, to connect the two adjacent battery packs in series. The first connecting portion and the second connecting portion further refine functional areas of the electrical connector. The first connecting portion is configured to connect all the prismatic cells in parallel, and the second connecting portion achieves series connection between the battery packs. Therefore, a connecting structure between the battery packs is simplified, a current carrying area of electric connection between the battery packs is increased, a connecting apparatus arranged between the battery packs separately is saved, the structure is simple, and the effect is good.

In some embodiments, the electrical connector includes a buffer groove, and the buffer groove is formed on one side of the first connecting portion near the second connecting portion. By means of the buffer groove, the battery packs is able to be connected in series more easily by slightly adjusting the positions thereof when the placement positions of the battery packs have a slight error, thereby avoiding repeated movement of the battery packs, and providing a buffer space for slight displacement during transportation.

As one of the core components of the disclosure, the shared pipeline assembly may be arranged in several manners:
In a first arrangement manner, the shared pipeline assembly includes an electrolyte injection pipeline. Each prismatic cell of the plurality of prismatic cells is communicated with the electrolyte injection pipeline via an electrolyte injection channel of each the prismatic cell. An explosion venting mechanism connected to the smoke treatment apparatus is arranged at one end of the electrolyte injection pipeline, and the other end is closed. The electrolyte injection pipeline may be a complete pipeline mounted on the battery pack, and electrolyte injection channels are arranged on all the prismatic cells in the battery pack and communicated with the electrolyte injection pipeline. Such arrangement achieves two purposes. Firstly, an electrolyte may be preinjected into the pipeline, to improve the uniformity of the electrolyte and avoid different battery capacities and the buckets effect caused by ununiform electrolytes among the prismatic cells in the battery pack. Also, the electrolyte may be replenished when the capacitance decreases after a plurality of cycles of the battery pack, to increase the concentrations of active materials such as lithium ions and various additives in each prismatic cell in the battery pack, thereby to some extent repairing the capacitance of the battery pack. Secondly, in case of thermal runaway of any prismatic cell in the battery pack, the thermal runaway smoke is discharged uniformly by the pipeline and the explosion venting mechanism, and disorderly discharge and safety accidents may be avoided.

Using a complete pipeline as the electrolyte injection pipeline requires high process requirements during mounting, and it is difficult to ensure that there is no leakage between the electrolyte injection channel and the electrolyte injection pipeline during actual operation, as well as that the position may not rupture or fall off when subjected to thermal runaway pressure. To solve the above problem, the shared pipeline assembly arranged in the second manner is preferred. The electrolyte injection pipeline includes a collecting pipe and a connecting pipe, wherein a plurality of collecting pipes and a plurality of connecting pipes are provided. The prismatic cell comprises a prismatic cell case, wherein a plurality of prismatic cell cases are provided. The plurality of collecting pipes are arranged on the plurality of prismatic cell cases respectively, and each collecting pipe of the plurality of collecting pipes is laid along the thickness or width direction of the prismatic cell case. The collecting pipes on two adjacent prismatic cells are connected by one connecting pipe to form the electrolyte injection pipeline. Such design reduces the difficulty of sealing and mounting between the electrolyte injection pipeline and the prismatic cell, and solves the problem of leakage between the electrolyte injection channel on the prismatic cell case and the electrolyte injection pipeline. In addition, an assembly process of the collecting pipes and the prismatic cell case may be further simplified by using an extrusion process or other integrated molding processes, and the cost is reduced.

As another core component of the disclosure, the smoke treatment apparatus may also be arranged in several manners:
In some embodiments, the smoke treatment apparatus is an ignition unit arranged outside the box and configured to ignite the thermal runaway smoke. Or, the smoke treatment apparatus is an adsorption unit arranged in or outside the box and configured to adsorb the thermal runaway smoke. Or, the smoke treatment apparatus is a cooling unit arranged in or outside the box and configured to cool the thermal runaway smoke. The ignition unit, the adsorption unit, and the cooling unit described above may independently undertake the work of smoke treatment. When the ignition unit is used, the thermal runaway smoke contains combustible gases, and may be ignited by the ignition unit and discharged, thereby reducing the risk of explosion and minimizing environmental pollution. When the adsorption unit is used, the adsorption unit may adsorb particulate matter, toxic and harmful gases, and corrosive liquids from the thermal runaway smoke, and discharge the remaining dischargeable gases out of the box. When the cooling unit is used, the cooling unit may cool down high-temperature thermal runaway smoke and condense liquids, thereby greatly reducing safety issues caused by a high-temperature overheated mixture.

Furthermore, combinations of the ignition unit, the adsorption unit, and the cooling unit in different forms not only may play the original roles, but also have a synergistic effect, thereby optimizing the treatment effect of the thermal runaway smoke.
(1) The smoke treatment apparatus includes the cooling unit and the adsorption unit. The cooling unit and the adsorption unit are arranged in or outside the box. A smoke inlet of the cooling unit is communicated with a shared pipeline assembly on each battery pack through a smoke channel, and a smoke outlet of the cooling unit is communicated with the adsorption unit. The adsorption unit and the cooling unit may cool the thermal runaway smoke before adsorption, which may avoid damaging the adsorption unit and reduce maintenance costs in the later stage.
(2) The smoke treatment apparatus includes the cooling unit and the ignition unit. The cooling unit is arranged in or outside the box, and the ignition unit is arranged outside the box. A smoke inlet of the cooling unit is communicated with a shared pipeline assembly on each battery pack through a smoke channel, and a smoke outlet of the cooling unit is connected to the ignition unit. The ignition unit ignites the gases and particulate matter that are cooled by the cooling unit to eliminate liquids, thereby improving the efficiency of ignition and subsequently enhancing the treatment efficiency of the thermal runaway smoke.
(3) The smoke treatment apparatus includes the adsorption unit and the ignition unit. The adsorption unit is arranged in or outside the box, and the ignition unit is arranged outside the box. A smoke inlet of the adsorption unit is communicated with a shared pipeline assembly on each battery pack through a smoke channel, and a smoke outlet of the adsorption unit is connected to the ignition unit. The ignition unit may ignite the gases from which toxic and harmful substances and liquids are adsorbed by the adsorption unit, thereby achieving better effect and being more environmentally friendly.
(4) The smoke treatment apparatus includes the cooling unit, the adsorption unit, and the ignition unit. The cooling unit and the adsorption unit are arranged in or outside the box, and the ignition unit is arranged outside the box. A smoke inlet of the cooling unit is communicated with a shared pipeline assembly on each battery pack through a smoke channel, a smoke outlet of the cooling unit is connected to a smoke inlet of the adsorption unit, and a smoke outlet of the adsorption unit is connected to the ignition unit. A combination of the ignition unit, the adsorption unit, and cooling unit has the best synergistic effect. After being cooled by the cooling unit, partial liquids are condensed. The remaining particulate matter and gases carrying uncondensed liquids enter and are adsorbed by the adsorption unit. Then, the remaining part is only combustible gases which are ignited and discharged by the ignition unit, thereby greatly improving the efficiency of thermal runaway smoke treatment, minimizing damage to various apparatuses, reducing maintenance costs in the later stage, and being more environmentally friendly.

### Brief Description of the Drawings

Fig. 1 is a first schematic structural diagram of a battery pack in Embodiment 1;
Fig. 2 is a second schematic structural diagram of the battery pack in Embodiment 1;
Fig. 3 is a first schematic structural diagram of a cell case in Embodiment 1;
Fig. 4 is a second schematic structural diagram of the cell case in Embodiment 1;
Fig. 5a is a first schematic cross-sectional structural diagram of a lower cover plate of the cell case in Embodiment 1;
Fig. 5b is a second schematic cross-sectional structural diagram of the lower cover plate of the cell case in Embodiment 1;
Fig. 6 is a schematic structural diagram of the cell case and a connector in Embodiment 1;
Fig. 7a is a schematic structural diagram of the cell case and a sealing film in Embodiment 1;
Fig. 7b is a schematic cross-sectional structural diagram of the cell case and the sealing film in Embodiment 1;
Fig. 7c is a first schematic cross-sectional structural diagram of a lower cover plate and a sealing film in Embodiment 1;
Fig. 7d is a second schematic cross-sectional structural diagram of the lower cover plate and the sealing film in Embodiment 1;
Fig. 8a is a schematic structural diagram of the cell case and a sealing sheet in Embodiment 1;
Fig. 8b is a schematic cross-sectional structural diagram of the cell case and the sealing sheet in Embodiment 1;
Fig. 9 is a schematic structural diagram of an electrode terminal in Embodiment 1;
Fig. 10 is a schematic structural diagram after the upper cover plate and the electrode terminal are mounted in Embodiment 1;
Fig. 11 is a schematic structural diagram after various electrode terminals and a conductive connection seat are fixed in Embodiment 1;
Fig. 12 is a schematic diagram of dimensional definition of the electrode terminal in Embodiment 1;
Fig. 13 is a schematic diagram of dimensional definition of the upper cover plate and the electrode terminal in Embodiment 1;
Fig. 14 is a first schematic structural diagram of an energy storage device in Embodiment 2;
Fig. 15a is a schematic structural diagram of a fixing frame of the energy storage device in Embodiment 2;
Fig. 15b is a second schematic structural diagram of the energy storage device in Embodiment 2;
Fig. 16a is a schematic structural diagram of a battery pack in Example 2 from a first perspective;
Fig. 16b is a schematic structural diagram of the battery pack in Example 2 from a second perspective;
Fig. 16c is an exploded schematic diagram of the battery pack in Embodiment 2 from the first perspective;
Fig. 16d is an exploded schematic diagram of the battery pack in Embodiment 2 from the second perspective;
Fig. 17 is a schematic structural diagram of an electrical connector in Embodiment 2;
Fig. 18a is schematic structural diagram of a prismatic cell in Embodiment 2 from a first perspective;
Fig. 18b is schematic structural diagram of the prismatic cell in Embodiment 2 from a second perspective;
Fig. 18c is an exploded schematic diagram of two prismatic cells and a connector in a structural connection state in Embodiment 2;
Fig. 18d is a schematic cross-sectional structural diagram of the prismatic cell and the connector in Embodiment 2;
Fig. 18e is a schematic cross-sectional structural diagram of a lower cover plate of the prismatic cell in Embodiment 2 (an electrolyte injection channel being a circular hole);
Fig. 18f is a schematic cross-sectional structural diagram of the lower cover plate and a sealing film in Embodiment 2 (the sealing film being strip-shaped);
Fig. 18g is a schematic structural diagram of the prismatic cell and a sealing sheet in Embodiment 2;
Fig. 18h is a schematic cross-sectional structural diagram of the prismatic cell and the sealing sheet in Embodiment 2;
Fig. 19 is a schematic structural diagram of an electrode terminal in Embodiment 2;
Fig. 20 is a schematic structural diagram after the electrode terminal and a conductive connection seat are fixed in Embodiment 2;
Fig. 21 is an exploded schematic diagram of an upper cover plate in Embodiment 2;
Fig. 22a is a schematic structural diagram of a heat exchange assembly in Embodiment 2;
Fig. 22b is a schematic structural diagram of a first mounting member in the heat exchange assembly in Embodiment 2;
Fig. 22c is a schematic structural diagram of an insulation heat conducting sheet in the heat exchange assembly in Embodiment 2;
Fig. 23a is a schematic structural diagram of a temperature control apparatus in Embodiment 2;
Fig. 23b is a schematic structural diagram of another temperature control apparatus in Embodiment 2;
Fig. 23c is a schematic structural diagram of still another temperature control apparatus in Embodiment 2;
Fig. 23d is a schematic structural diagram of still another temperature control apparatus in Embodiment 2 from a first angle;
Fig. 23e is a schematic structural diagram of the still another temperature control apparatus in Embodiment 2 from a second angle;
Fig. 24a is a schematic structural diagram of a smoke treatment apparatus in Embodiment 3 from a first angle;
Fig. 24b is a schematic structural diagram of the smoke treatment apparatus in Embodiment 3 from a second angle;
Fig. 24c is a schematic structural diagram of an adsorption tank of the smoke treatment apparatus in Embodiment 3; and
Fig. 24d is a schematic structural diagram of an ignition unit of the smoke treatment apparatus in Embodiment 3.

List of Reference Numerals: 1100-Prismatic cell, 1200-Fixing assembly, 1201-First assembly member, 1202-Second assembly member, 1300-Shared pipeline assembly, 1400-Heat exchange assembly, 11-Upper cover plate, 112-First insulating member, 111-Second insulating member, 12-Lower cover plate, 121-First through hole, 13-Barrel, 131-First cell mounting seat, 132-Second cell mounting seat, 133-Heat dissipation groove, 134-Reinforcing rib, 14-Collecting pipe, 141-Connecting port, 142-Second through hole, 143-Explosion venting mechanism, 15-Electrode terminal, 150-Slot, 151-First end face, 1511-First area, 1512-Second area, 152-Second end face, 153-Side wall, 154-Conductive connection seat, 17-Connecting pipe, 171-Connecting nozzle, 181-Sealing film, 182-Sealing sheet, 1821-Traction ring, 19-Electrical connector, 1000-Box, 1001-Fixing frame, 1002-Fixing seat, 1010-Integrated cabinet, 1011-Cabinet door, 200-Battery pack, 201-Fixing assembly, 201a-First assembly member, 201b-Second assembly member, 300-Prismatic cell, 31-Electrode terminal, 31a-Positive electrode terminal, 31b-Negative electrode terminal, 310-Slot, 311-First end surface, 312-Second end surface, 313-Side wall, 314-Conductive connection seat, 32-Upper cover plate, 321-First insulating member, 322-Second insulating member, 33-Lower cover plate, 331-Through hole, 34-Barrel, 341-Reinforcing rib, 342-First assembly seat, 343-Second assembly seat, 344-Heat dissipation groove, 400-Shared pipeline assembly, 410-Collecting pipe, 412-Connecting pipe, 413-Connecting nozzle, 414-Connecting port, 415-Explosion venting mechanism, 421-Sealing film, 422-Sealing sheet, 423-Traction ring, 500-Temperature control apparatus, 510-Secondary heat exchange pipe, 511-Outlet, 512-Inlet, 520-Cooling and heating machine, 521-Liquid inlet, 522-Liquid outlet, 530-Radiator, 531-Fan, 540-Circulating pump, 551-First pipe section, 552-Second pipe section, 553-Third pipe section, 554-Fourth pipe section, 555-Fifth pipe section, 556-Sixth pipe section, 557-Seventh pipe section, 558-Eighth pipe section, 561-First control valve, 562-Three-way electric valve, 563-First electric valve, 564-Second electric valve, 565-Second control valve, 570-Electrical control box, 580-Expansion tank, 581-First pipeline, 582-Second pipeline, 583-Third pipeline, 584-Fourth pipeline, 601-BMS slave, 602-Slave mounting seat, 700-Electrical connector, 701-First connecting portion, 702-Second connecting portion, 703-Buffer groove, 704-Connecting hole, 800-Insulation heat exchange member, 801-Insulation heat exchange member fixing seat, 802-First mounting member, 803-Second mounting member, 804-Primary heat exchange pipe, 806-First insulation heat conducting sheet, 807-Third mounting member, 808-Fourth mounting member, 809-Second insulation heat conducting sheet, 900-Smoke treatment apparatus, 912-Primary pressure relief pipe, 913-Secondary pressure relief pipe, 914-Pressure relief main pipe, 921-Adsorption tank, 9211-Perforated plate, 9212-Connecting rod, 930-Trigger unit, 940-Ignition unit, 941-Smoke exhaust pipe, 942-Iginiter, 943-Fire arrestor, 944-Rainproof cover, 951-Cooling tank, 952-Reflux tank, and 960-Sensing unit.

### Detailed Description of the Embodiments

In order to make the objectives, technical solutions, and advantages of the disclosure more clearly understood, the disclosure will be further described in detail below with reference to accompanying drawings and embodiments. It should be understood that the specific embodiments described herein are used to explain the disclosure and are not intended to limit the disclosure.

### Embodiment 1

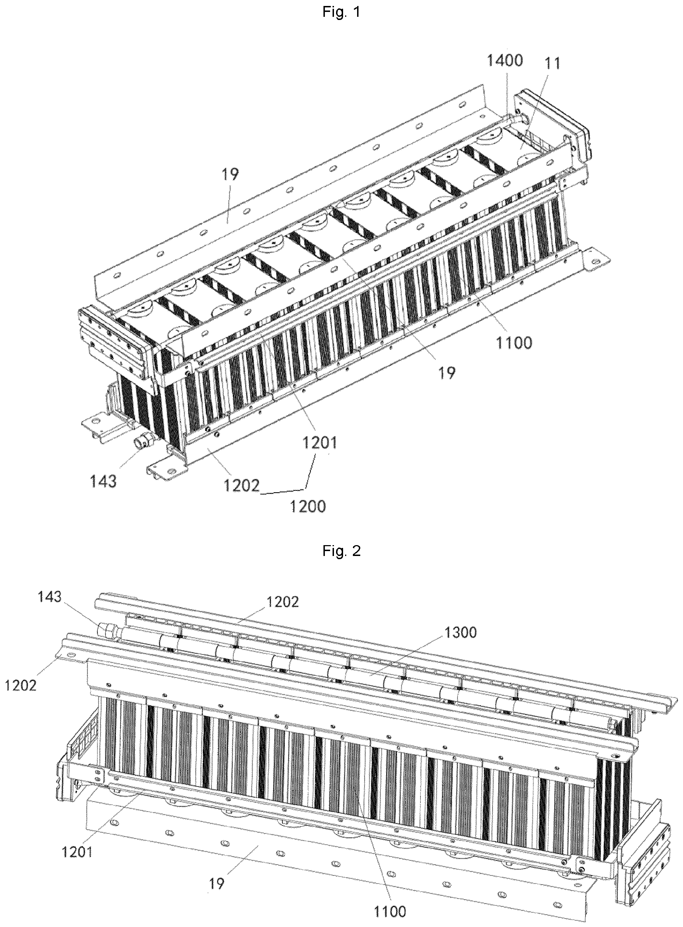

The disclosure provides a battery pack, and a basic structure of the battery pack is as shown in Fig. 1 and Fig. 2. The battery pack includes a prismatic cell 1100, a fixing assembly 1200, a shared pipeline assembly 1300, and a heat exchange assembly 1400, wherein a plurality of plurality of prismatic cells 1100 are provided. The plurality of prismatic cells 1100 are connected in parallel. The fixing assembly 1200 is configured to fixedly connect the plurality of prismatic cells 1100 side by side to form the battery pack. The shared pipeline assembly 1300 is configured to communicate all inner cavities of the plurality of prismatic cells 1100, so that all the prismatic cells 1100 of the plurality of prismatic cells 1100 in the battery pack are in one electrolyte system. The heat exchange assembly 1400 is configured to be fixedly connected to electrode terminals on the same sides of the plurality of prismatic cells 1100, to achieve heat exchange between all the prismatic cells 1100 of the plurality of prismatic cells 1100 in the battery pack and the outside. Some embodiments of the disclosure, the plurality of prismatic cells in the battery pack are connected in parallel and fixed by the fixing assembly to form the battery pack. By means of the shared pipeline assembly 1300, all the prismatic cells in the battery pack are in the same electrolyte system, thereby improving uniformity of electrolytes in the prismatic cells in the battery pack, and prolonging a cycle life. Also, an electrolyte may be replaced or replenished for the battery pack through the shared pipeline assembly, thereby prolonging the service life of the battery pack. By means of the heat exchange assembly, a temperature control apparatus may be connected to control the temperature of the battery pack, thereby improving the safety in use of the battery pack.

As shown in Fig. 1 and Fig. 2, in the embodiment, a specific structure of the fixing assembly 1200 includes a first assembly member 1201 and a second assembly member 1202, the first assembly member 1201 is fixedly connected to a side wall of a barrel of the prismatic cell 1100 and is configured to fix the plurality of prismatic cells 1100 arranged side by side as a whole. The second assembly member 1202 is positioned below the plurality of prismatic cells 1100 arranged side by side and is fixedly connected to the lower cover plate of the prismatic cell 1100. In some implementations, the fixing assembly may also be a fixing case, and the plurality of prismatic cells are fixedly arranged side by side in the fixing case.

As shown in Fig. 2, in the embodiment, a structure of the shared pipeline assembly 1300 includes an electrolyte injection pipeline. Each prismatic cell 1100 is communicated with the electrolyte injection pipeline via an electrolyte injection channel of the prismatic cell. One end of the electrolyte injection pipeline is used as a main electrolyte injection port, and the other end is closed. The prismatic cell includes a sealing mechanism. The sealing mechanism is arranged at the electrolyte injection channel of the prismatic cell 1100, and is configured to seal the prismatic cell 1100. The sealing mechanism dissolves when encountering an electrolyte or forms an opening under an external force, to make the electrolyte injection channel be communicated and communicate the electrolyte injection pipeline with an electrolyte cavity of the prismatic cell. The electrolyte injection pipeline and the sealing mechanism keep the inner cavity of each prismatic cell sealed and keep an electrode assembly, an electrolyte, and the like from coming into contact with air before a shared electrolyte system is formed in the battery pack. The sealing mechanism is removed when the electrolyte needs to be injected and shared, and then the electrolyte is injected uniformly.

As shown in Fig. 1, in the embodiment, the heat exchange assembly 1400 may be in the following two forms: First, the heat exchange assembly is a heat transfer pipe, and the heat transfer pipe may be a heat pipe, a copper pipe, an aluminum pipe, a ceramic pipe, and the like. The heat transfer pipe is connected to electrode terminals on the same sides in the battery pack, to transfer heat concentrated on the electrode terminal of each prismatic cell out for heat exchange. When insulation is required between the heat transfer pipe and the electrode terminals, or between the heat transfer pipe and an external heat exchange apparatus, insulation is performed to ensure normal operation of the battery pack. Second, the heat exchange assembly may also directly use a water cooling pipe. The water cooling pipe is insulated from the electrode terminals. The water cooling pipe is connected to the electrode terminals on the same sides in the battery pack, to transfer heat concentrated on the electrode terminal of each prismatic cell out for heat exchange.

To provide a more detailed introduction to the shared pipeline assembly and the heat exchange assembly, the following explanation will be given based on the prismatic cells that form the battery pack:

### 1. Shared pipeline assembly

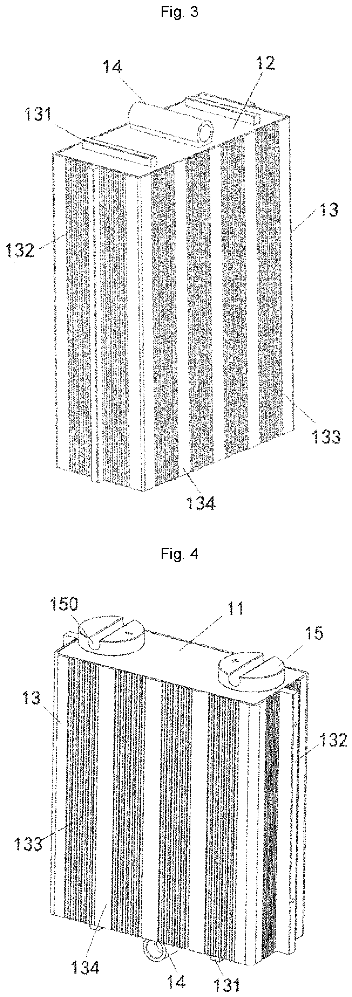

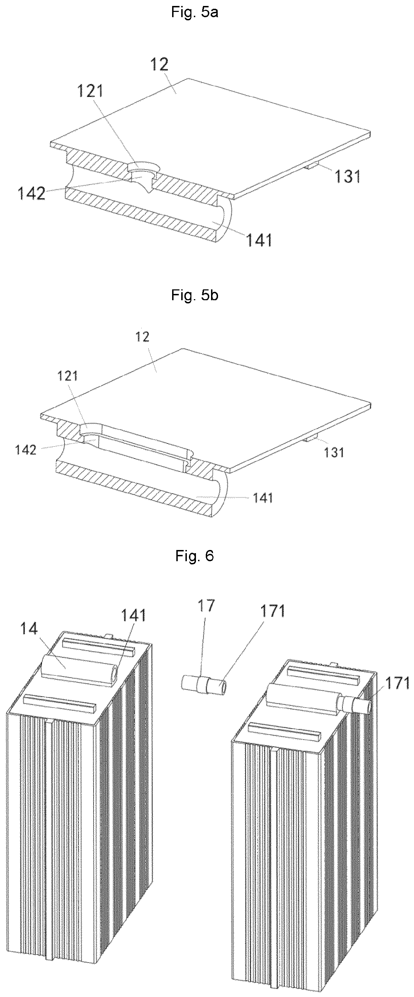

As shown in Fig. 3 and Fig. 4, in the embodiment, the prismatic cell is formed by enclosing an upper cover plate 11, a lower cover plate 12, and a barrel 13. Electrode terminals 15 are arranged on the upper cover plate 11, and a collecting pipe 14 is arranged on the lower cover plate 12. As shown in Fig. 5a and Fig. 5b, a first through hole 121 is formed in the lower cover plate 12, and the collecting pipe 14 covering the first through hole 121 and extending along a width direction of the lower cover plate is arranged on the lower cover plate 12. A second through hole 142 is formed in the collecting pipe 14, and the first through hole 121 and the second through hole 142 are communicated. As shown in Fig. 5a, the first through hole 121 and the second through hole 142 are circular holes respectively, and may also be strip-shaped through holes as shown in Fig. 5b. In some implementations, the collecting pipe 14 and the lower cover plate 12 are integrated, and then, the first through hole and the second through hole form the electrolyte injection channel.

In some implementations, the collecting pipe is arranged on the barrel of the prismatic cell and extends along a length or width direction of the lower cover plate. In some implementations, the collecting pipe is arranged on the lower cover plate of the prismatic cell and extends along a length direction of the lower cover plate. In some implementations, when the prismatic cells are used to form a battery pack that does not share the electrolyte, the collecting pipes 14 are connected to form a communicated electrolyte injection pipeline that may be used as an explosion venting channel for the battery pack, where one end of the explosion venting channel is provided with a blocking member, and the other end is used as a smoke outlet. When any prismatic cell experiences thermal runaway, thermal runaway smoke in the prismatic cell is discharged through the electrolyte injection channel to the explosion venting channel, and discharged from the smoke outlet of the explosion venting channel. A smoke treatment apparatus may be arranged at the smoke outlet to cool and adsorb or ignite the thermal runaway smoke.

In some implementations, the communicated electrolyte injection pipeline formed by connecting the collecting pipes 14 may also be used as an electrolyte sharing channel of the battery pack, where one end is provided with a blocking member for closing the electrolyte sharing channel, and the other end is provided with a detachable electrolyte injection mechanism to replace a detachable explosion venting mechanism 143. The electrolyte injected through the electrolyte injection mechanism enters the cell case through the electrolyte injection channel, so that all the prismatic cells in the battery pack are in a uniform electrolyte environment, and the uniformity of the electrolyte in the battery pack may be effectively improved. After the electrolyte sharing is implemented, the electrolyte injection mechanism is replaced with the explosion venting mechanism 143, and during battery operation, when any prismatic cell experiences thermal runaway, the electrolyte injection pipeline may still be used as the explosion venting channel.

In addition, during use, the shared pipeline assembly may also be used to replenish and replace the electrolyte for the battery pack. When the battery pack is used for a certain number of years and the electrolyte is consumed, the electrolyte is extracted and replaced with a new electrolyte, or a new electrolyte is directly replenished, to prolong the service life of the battery pack. After electrolyte injection, the explosion venting mechanism is remounted to be used for discharging thermal runaway smoke.

As shown in Fig. 6, in some implementations, the electrolyte injection pipeline includes a collecting pipe 14 and a connecting pipe 17, wherein a plurality of collecting pipes 14 and a plurality of connecting pipes 17 are provided. The prismatic cell 1100 comprises a prismatic cell case, wherein a plurality of prismatic cell cases are provided. The plurality of collecting pipes 14 are arranged on the plurality of prismatic cell cases of the prismatic cells 1100 respectively, and each collecting pipe of the plurality of collecting pipes is laid along the thickness or width direction of the prismatic cell case of the prismatic cell 1100. The collecting pipes 14 on two adjacent prismatic cells 1100 are connected by one connecting pipe 17. Due to the collecting pipe being integrated with the prismatic cell case of the prismatic cell 1100 and connected by the connecting pipe, the prismatic cell case of the prismatic cell is simple and convenient to process, economical and practical, and has a good sealing effect.

The collecting pipes 14 are connected and fixed by the connecting pipes 17 to form the explosion venting channel and/or the electrolyte sharing channel. The external dimensions of the connecting pipe 17 are equivalent to the external dimensions of the collecting pipe 14, thereby being favorable for improving the stability of connection between the collecting pipes 14. In some embodiments, the connecting pipe 17 includes two connecting nozzles 171, connecting ports 141 are formed at two ends of the collecting pipe, and the connecting nozzles 171 are embedded in the connecting ports 141 for sealed connection. Or, the connecting pipe includes connecting ports, two ends of the collecting pipe are provided with connecting nozzles, and the connecting nozzles are embedded in the connecting ports for sealed connection. The shape of the connecting nozzle is selected as a micro-conical shape, so that the connecting nozzle may be inserted into the connecting port conveniently. In some embodiments, the connecting nozzle is in interference fit with the connecting port, and the connecting nozzle is riveted with the connecting port. During riveting, an epoxy adhesive or other adhesives may also be added to a riveted surface to further improve sealing and fixing effects. Or, the connecting nozzle is in threaded connection with the connecting port.

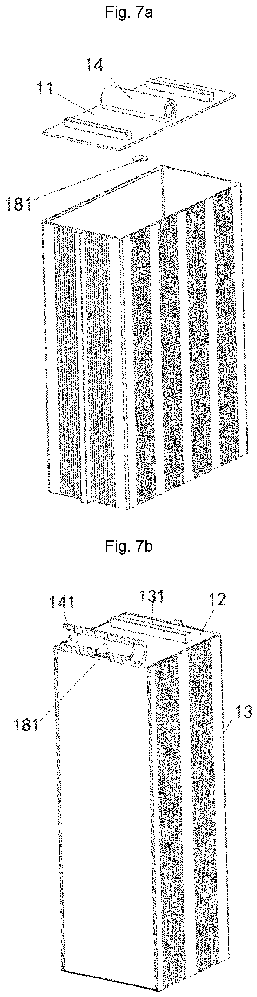

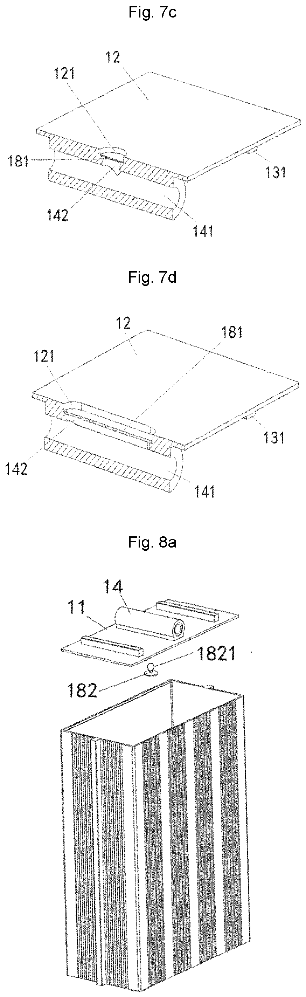

As shown in Fig. 7a, Fig. 7b, Fig. 7c, and Fig. 7d, a sealing film 181 is arranged on the electrolyte injection channel. The sealing film 181 has two use cases: When the sealing film is used as an explosion venting film, and the prismatic cell experiences thermal runaway, thermal runaway smoke enters the explosion venting channel formed by the collecting pipes 14 after bursting or melting the sealing film 181. When used as an electrolyte injection sealing film, the sealing film 181 may dissolve when encountering an electrolyte, and may keep the inner cavity of the prismatic cell isolated from outside air before a shared electrolyte system is formed in the prismatic cell. A protective film is attached to one side of the sealing film 181 facing the inside of the case to prevent the electrolyte in the cell from dissolving the sealing film in advance. When an electrolyte needs to be injected, the electrolyte enters the electrolyte sharing channel formed by the collecting pipes 14, and after the sealing film 181 dissolves when encountering the electrolyte, the protective film attached thereto also falls off, so that the electrolyte may enter the cell case, thereby achieving the effect of electrolyte communication among the prismatic cells in the battery pack. Such a manner avoids use of other tools and has low requirements for an operating environment. As long as the electrolyte sharing channel is sealed in a timely manner after electrolyte injection, the electrolyte and the electrode assembly may be ensured not to be exposed to air.

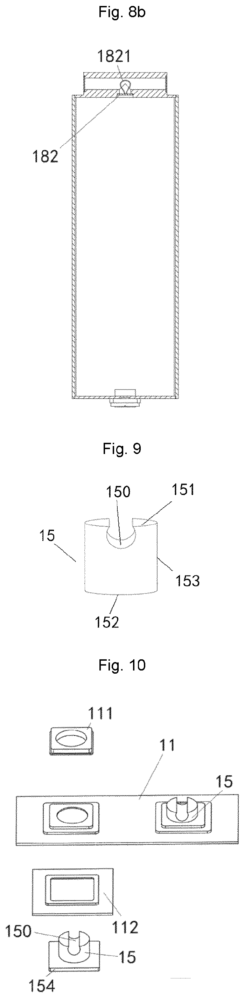

As shown in Fig. 8a and Fig. 8b, a sealing sheet 182 is arranged on the electrolyte injection channel, and a traction ring 1821 is arranged on the sealing sheet 182. A traction wire is threaded through the traction ring 1821 when the battery pack is assembled. Before electrolyte injection, the traction wires threaded through all the traction rings 1821 are pulled to pull apart the sealing sheet 182 of each prismatic cell, so that all prismatic cells form openings for uniformly injecting the electrolyte into all the prismatic cells, thereby achieving the effect of electrolyte communication among the prismatic cells in the battery pack. This operation is to be performed in a vacuum environment to prevent the battery assembly from being exposed to air.

### 2. Heat exchange assembly

Referring to Fig. 1, in the embodiment, the heat exchange assembly 1400 is provided with the heat transfer pipe. A slot is formed in the electrode terminal of the prismatic cell, and the heat transfer pipe is clamped in the slot of the electrode terminal, thereby transferring heat concentrated on the electrode terminal of each prismatic cell out for heat exchange.

In order to improve the heat transfer effect, the embodiment also designs the structure of the slot formed in the electrode terminal: The structure of the electrode terminal is as shown in Fig. 9 and Fig. 10. In the embodiment, the electrode terminal 15 is a column including a first end face 151, a second end face 152, and a side wall 153. At least one slot 150 is formed in the first end face 151 or the side wall 153 for mounting the heat transfer pipe, i.e., the opening of the slot 150 is on the first end face 151 or the side wall 153. An electric connection area is arranged on the first end face 151, and the second end face 152 is configured to arrange a conductive connection seat 154 to be electrically connected to an electrode assembly in the prismatic cell case.

As shown in Fig. 10, in the embodiment, the electrode terminal 15 is fixed to the upper cover plate 11 of the prismatic cell. To insulate the electrode terminal from the upper cover plate 11, a first insulating member 112 and a second insulating member 111 are also arranged. The first insulating member 112 is arranged above the upper cover plate 11, the second insulating member 111 is arranged below the upper cover plate 11, and the electrode terminal 15 passes through the second insulating member 111, the upper cover plate 11, and the first insulating member 112 sequentially and then is fixed to the upper cover plate 11.

As shown in Fig. 10, in the embodiment, the conductive connection seat 154 is a conductive connection sheet having a thickness of 2-3 mm and a rectangular shape, and may also have a different shape according to different needs. The conductive connection seats for a positive electrode terminal and a negative electrode terminal are made of different materials. In the embodiment, the positive electrode terminal is made of an aluminum sheet and the negative electrode terminal is made of a copper sheet. The conductive connection seats 154 may be integrally formed with the positive electrode terminal, and fixed with the negative electrode terminal by welding or clamping. The specific fixing manner varies depending on the material selected for the electrode terminal or the conductive connection sheet. Also, a copper sheet may be added, to the integrally formed electrode terminal and conductive connection sheet made of aluminum, as a conductive connection sheet for the negative electrode terminal.

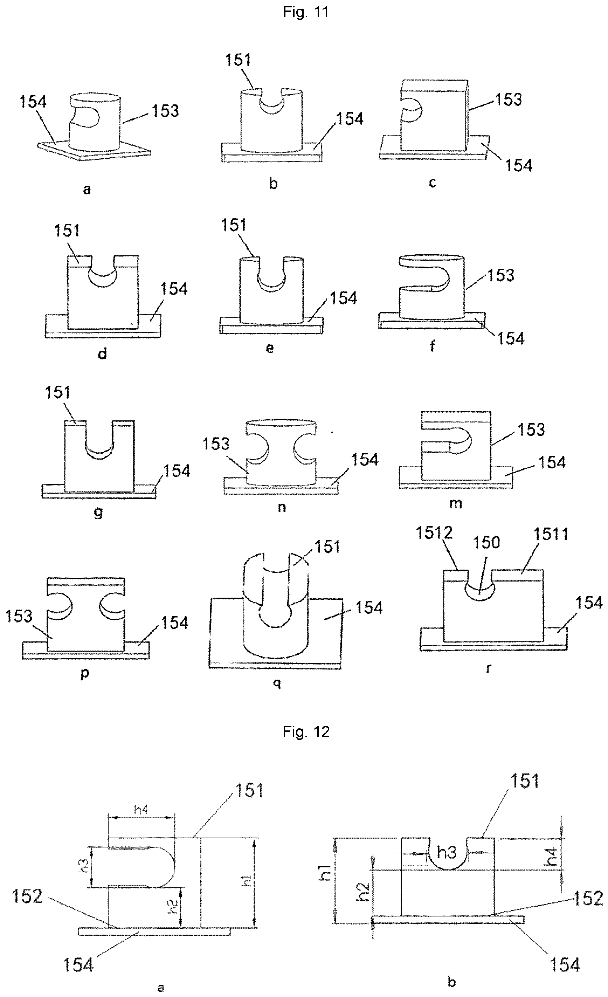

Fig. 11 and Fig. 12 are schematic structural diagrams of the electrode terminals of a plurality of structures connected to the conductive connection seats in the embodiment. In the schematic structural diagrams of an electrode terminal a and an electrode terminal b as shown in Fig. 12, the height of the electrode terminals is h1, the distance from the lowest point of the slot to the second end face 152 is h2, the width of the widest point of the slot is h3, and the depth of the slot is h4. In different implementations, the cross section of the slot 150 is C-shaped or U-shaped. In the schematic structural diagrams of an electrode terminal a, an electrode terminal b, an electrode terminal c, an electrode terminal d, an electrode terminal n, an electrode terminal p, an electrode terminal q, and an electrode terminal r as shown in Fig. 11, The cross section of the slot is C-shaped, and the width of the opening of the slot is less than that of the widest point h3 of the slot. Such design is favorable for clamping the heat transfer pipe in the slot 150 in an interference fit manner. The radians formed at two ends of the C-shaped slot have natural tension, and are favorable for tightly clamping the heat transfer pipe in the slot. In the schematic structural diagrams of an electrode terminal e, an electrode terminal f, an electrode terminal g, and an electrode terminal m as shown in Fig. 11, the cross section of the slot is U-shaped, and the width of the opening of the slot is slightly less than that of the widest point h3 of the slot. Such design is convenient for placing the heat transfer pipe, and may provide a sufficient operating space for flattening or more tightly attaching the heat transfer pipe to the slot using a special tool.

In the schematic structural diagrams of an electrode terminal b, an electrode terminal d, an electrode terminal e, an electrode terminal g, and an electrode terminal q as shown in Fig. 11, the slot 150 may be formed in the first end face 151 of the electrode terminal. Then, except the gap at the opening of the slot, the first end face 151 is partially or completely used as the electric connection area for connection with an electrode plate. In the schematic structural diagrams of the electrode terminal a, the electrode terminal c, the electrode terminal f, the electrode terminal m, the electrode terminal n, and the electrode terminal p as shown in Fig. 11, the slot 150 may be formed in the side wall 153 of the electrode terminal. Then, the first end face 151 is completely used as the electric connection area for connection with an electrode plate. In the schematic structural diagrams of the electrode terminal n and the electrode terminal p as shown in Fig. 11, when the opening of the slot 150 is formed in the side wall 153, two slots may be formed in the side wall of the electrode terminal, to increase the number of the heat transfer pipes that are placed, and improve the heat transfer efficiency of the electrode terminal.

When the area of the electric connection area is too small, the current carrying area of the electrode terminal is reduced and the temperature of the electrode terminal may be increased. In some implementations, when the first end face is partially used as the electric connection area, to increase the area of the electric connection area, the slot 150 is eccentrically arranged. In the schematic structural diagram of the electrode terminal r as shown in Fig. 11, the slot 150 separates the first end face into a first area 1511 and a second area 1512. The first area 1511 is used as the electric connection area, and the area of the first area 1511 accounts for not less than 50% of the area of the first end face. Such design is convenient for electric connection, effectively increases the area of the electric connection area, and increases the current carrying area. It should be noted that the area of the first end face includes the area reduced due to the opening of the slot, i.e., the area of the first end face is equal to the area of the second end face.

In the schematic structural diagrams of the electrode terminal a, the electrode terminal c, the electrode terminal q, and the electrode terminal r as shown in Fig. 11, the horizontal cross sections of the electrode terminals may be circular, rectangular or racetrack-shaped. Electrode terminals of different shapes may be selected depending on different battery models, and other shapes may also be used, which will not be exhaustively listed in the embodiment.

Fig. 12 shows schematic diagrams of dimensional definition of the electrode terminal in the embodiment. The second end face 152 of the electrode terminal is close to the electrode assembly, so the second end face 152 is closer to the electrode assembly in the cell, and the heat transfer pipe is to be arranged as close as possible to the second end face 152. To adapt to most prismatic cells commonly used on the market, in the embodiment, the height h1 of the electrode terminal is 20-25 mm, and the distance h2 from the lowest point of the slot to the second end face 152 of the electrode terminal is 7-12 mm. Such arrangement may make the heat transfer pipe as close as possible to the inside of the cell for heat transfer. When the diameter of the heat transfer pipe is too smaller than that of the slot, the heat transfer pipe cannot be in close contact with the slot. When the diameter of the heat transfer pipe is too larger than that of the slot, the heat transfer pipe is difficult to mount. Therefore, the ratio of the diameter of the heat transfer pipe to the widest point h3 of the slot is (1:1.05) to (1:1.1). In the embodiment, when the diameter of the heat transfer pipe is φ10, the diameter of the heat transfer pipe is 10 mm, and the widest point h3 of the slot is 10.5-11mm. Thus, the heat transfer pipe may be conveniently placed in the slot, and then tightly pressed and closely attached to the slot to improve the heat transfer efficiency.

In some implementations, in the schematic structural diagram of the electrode terminal b as shown in Fig. 12, the depth h4 of the slot is less than the diameter of the heat transfer pipe, so that the heat transfer pipe slightly protrudes out of the surface of the electrode terminal, which is favorable for tightly pressing and flattening the heat transfer pipe to be in close contact with the slot.

In some implementations, the surface of the slot is provided with an insulating layer which may be coated with an insulating material or pasted with a silicone layer, a rubber layer and the like, or an insulating layer may be arranged on the heat transfer pipe, so that the heat transfer pipe made of a metal and the electrode terminal are mounted in an insulated manner.

In the embodiment, by forming the slot in the electrode terminal and placing the heat transfer pipe in the slot, the temperature in the electrode terminal and the cell may be effectively controlled. Further, by arranging the electric connection area on the first end face of the electrode terminal, an electrode plate may be mounted on the electric connection area to achieve serial or parallel connection of a plurality of prismatic cells. The embodiment is simple in structure, highly practical, and easy to operate, may balance the heat of the battery pack, and has a good heat dissipation effect and low cost.

The following is a summary analysis of performance parameters of the prismatic cell during battery charging and discharging at 20±5°C and after cooling using a heat pipe and a TEC, where the prismatic cell uses a structure of the electrode terminal provided with of the slot and the heat transfer pipe in the embodiment:
As shown in Table 1 and with reference to Fig, 12, the portion marked with h2 is the distance from the deepest point of the slot to the second end face. After the heat transfer pipe is placed, the temperatures of the cell and the electrode terminal are tested by a thermometer, and it is found that with change of the value of h2, the temperatures of the electrode terminal and the case of the cell change accordingly. When h2 is less than 7 mm, after the electrode terminal and an upper cover assembly are assembled, the space for mounting the heat transfer pipe is insufficient, so h2 being less than 7 mm is not considered. When h2 is greater than or equal to 13 mm, although the temperature of the electrode terminal decreases compared to the case where the electrode terminal of the embodiment is not used, the temperature of the cell no longer decreases. As the value of h2 increases to a range of 7-12 mm, the temperature of the electrode terminal is not higher than 34°C, and the temperature measured on the surface of the cell case is about 36°C. With respect to overall temperature control, compared to batteries using an electrode terminal of a conventional prismatic cell on the market, the temperature of the electrode terminal is reduced by at least 19.2%, and the surface temperature of the cell case is reduced by at least 4.7%, thereby effectively reducing the overall temperature of the cell, significantly reducing the temperature of the electrode terminal, and greatly improving the safety performance.

**Table 1 Surface temperatures of cell electrode terminals and cell cases with slots of different sizes**

| Height h2 (mm) | Comparative Example: | 7 | 8 | 9 | 10 | 11 | 12 | 13 | 14 |
|---|---|---|---|---|---|---|---|---|---|
| | Conventional electrode terminal on the market | | | | | | | | |
| Surface temperature of electrode terminal (°C) | 42 | 29.3 | 30.8 | 31.8 | 32.5 | 33.2 | 33.9 | 35.1 | 36.4 |
| Surface temperature of cell case (°C) | 38 | 33.9 | 34.2 | 34.6 | 35.1 | 35.6 | 36.2 | 36.4 | 36.6 |

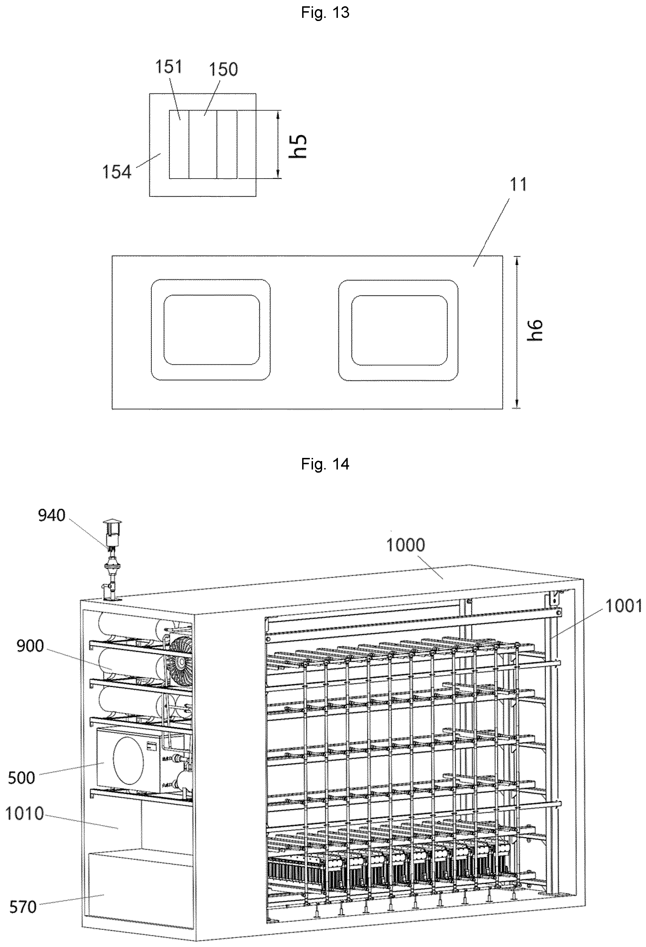

As shown in Table 2 and with reference to Fig. 13, the ratio of the length h5 of the slot to the width h6 of the cover plate has a significant impact on the temperature of the cell electrode terminal. When h2 is fixed at 7 mm, the larger the contact area between the heat transfer pipe and the electrode terminal, the better the heat transfer and heat dissipation effects, but the maximum length may not exceed the width of the cover plate. After the temperatures of the electrode terminals with the slots of different lengths during 1C charging and discharging of a battery are tested, compared to an electrode terminal of a conventional prismatic cell on the market, it can be seen that the surface temperatures of the electrode terminals are reduced by at least 20.2%. The temperatures of the electrode terminals in the embodiment are significantly reduced, and the safety performance is greatly improved. The ratio of the length h5 of the slot to the width h6 of the cover plate is (0.7:1) to (0.9:1), which may achieve a good cooling effect and is energy-saving and environmentally friendly.

**Table 2 Surface temperatures of cell electrode terminals with slots of different sizes**

| | | | | | | |
|---|---|---|---|---|---|---|
| h5:h6 | Comparative Example | 0.5:1 | 0.6:1 | 0.7:1 | 0.8:1 | 0.9:1 |
| Temperature of electrode terminal (°C) | 42 | 33.5 | 32.6 | 31.1 | 30.4 | 29.8 |

The prismatic cell of the embodiment also has the following optimization design:
As shown in Fig. 3 and Fig. 4, to ensure convenient connection of the prismatic cell to the fixing assembly, a first cell mounting seat 131 is arranged on the lower cover plate 12 along the width direction thereof and is configured to connect the second assembly member 1202; and a second cell mounting seat 132 is arranged on the side wall of the barrel along the height direction thereof and is configured to connect the first assembly member 1201. A plurality of heat dissipation grooves 133 are formed in the outer surface of the barrel 13 along the height direction thereof for heat dissipation of the cell case. A plurality of reinforcing rib 134 are also arranged on the barrel 13 along the height direction thereof to improve the compressive strength of the barrel. The lower cover plate 12 and the collecting pipe 14 are integrally formed aluminum extrusion parts. The barrel 13 is also an aluminum extrusion part, and the upper cover plate 11, the lower cover plate 12, and the barrel 13 are fixed by laser welding. Such a fixing manner is economical and convenient and has a good effect.

In the embodiment, as shown in Fig. 1 and Fig. 2, the battery pack is further provided with an electrical connector 19 for connecting two adjacent battery packs in series.

### Embodiment 2

An energy storage device is a new energy device that stores a plurality of battery packs in a container or a cabinet and performs peak load shifting, frequency modulation, and other functions, and has the advantages including easy mounting, easy transportation, and modularity. The battery packs in the energy storage device are prone to electrolyte loss when exposed to high temperatures, which may affect the lifespan of the battery packs. High temperatures may also lead to thermal runaway, causing safety issues. Temperature control of existing energy storage devices is achieved by ventilation or an air conditioning system. In existing technical solutions, the temperature control manner using the air conditioning system controls the ambient temperature in an energy storage cabinet, i.e., regulates the external environment of the battery packs, which achieves temperature control to a certain extent. However, during use of the battery packs, it is found that the temperatures of the battery cells are difficult to control. Even an air conditioning device is arranged externally, when the temperature of a certain battery cell in the battery packs remains high, the battery cell may experience thermal runaway, posing a significant safety hazard. Therefore, the effect of temperature control using the air-conditioning system on an energy storage system is unsatisfactory. How to improve the temperature control effect and safety of the energy storage device is an urgent problem to be solved.

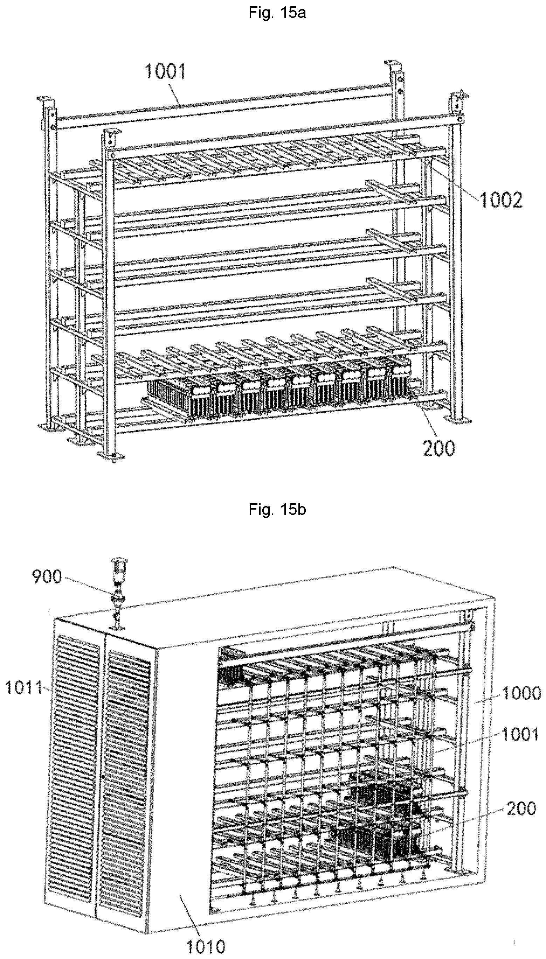

As shown in Fig. 14 and Fig. 15a, to solve the problem of unsatisfactory temperature control effect of an energy storage device, the embodiment provides an energy storage device. The energy storage device includes a box 1000, a fixing frame 1001, a temperature control apparatus 500, a battery management system (BMS), and a plurality of battery packs 200. The fixing frame 1001 is arranged in the box 1000. A plurality of fixing seats 1002 used to fix the battery packs 200 are arranged in the fixing frame 1001, and the plurality of battery packs 200 are fixed to the fixing seats 1002 and connected sequentially in series. The box in Fig. 14 is not fully filled with the battery packs 200. In actual use, the number of the battery packs 200 is to be adjusted according to the needs of charging and discharging.

As shown in Fig. 15b, an integrated cabinet 1010 is arranged outside the box 1000, and the integrated cabinet 1010 is provided with a cabinet door 1011. The temperature control apparatus is mounted in the integrated cabinet 1010, and used to cool the battery packs via a heat exchange assembly, or heat the battery packs via the heat exchange assembly. The integrated cabinet is arranged to make the structure of the energy storage device more compact, and the temperature control apparatus may be protected when placed in the integrated cabinet. In some cases, the temperature control apparatus may be directly arranged outside the box without additionally arranging the integrated cabinet.

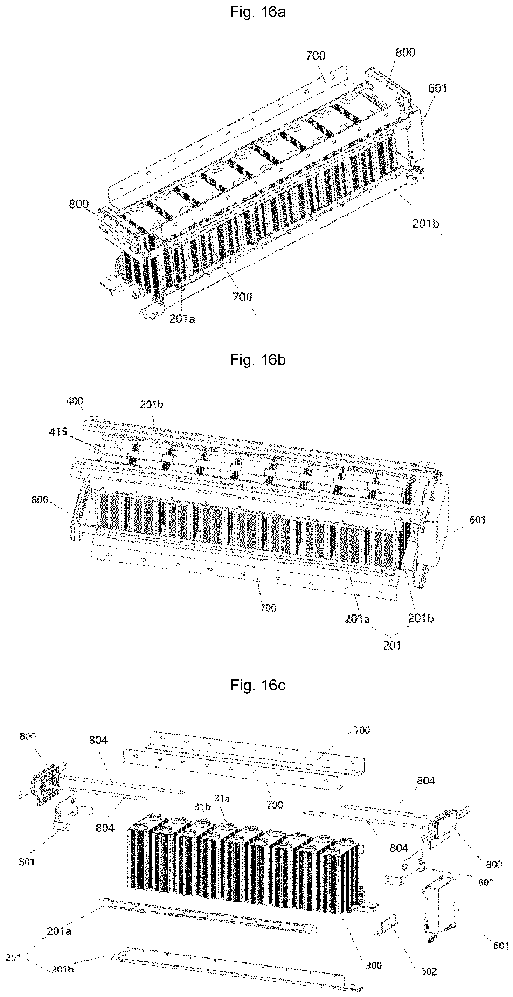

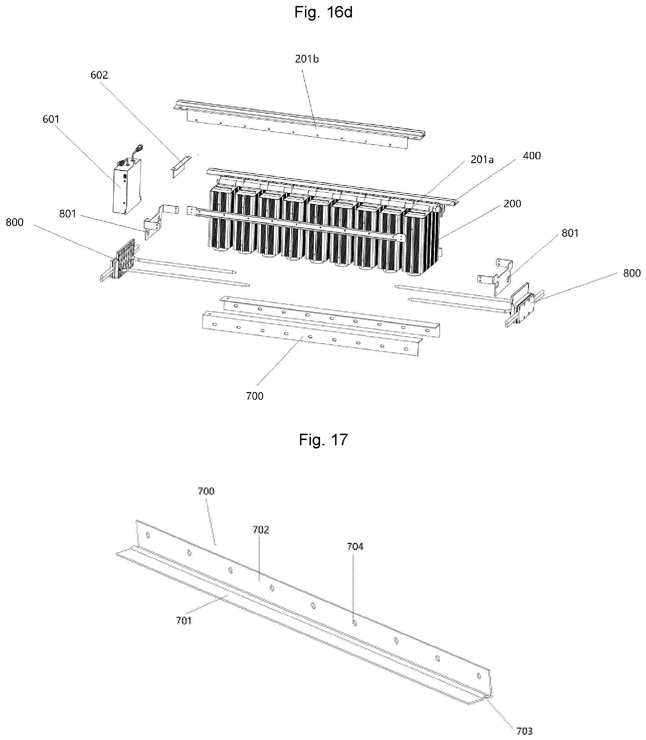

In an embodiment, the BMS includes a BMS host and BMS slaves 601 of which the number is the same as that of the battery packs 200. The BMS host may be arranged in the integrated cabinet 1010 or in a position far from the energy storage device. The BMS slaves 601 are arranged on the battery packs 200 respectively to collect parameters of the battery packs 200 and upload the parameters to the BMS host. The BMS host communicates with all the BMS slaves respectively to send control instructions to the BMS slaves. As shown in Fig. 16c, the BMS slave 601 is fixed to the battery pack 200 via a slave mounting seat 602.

As shown in Fig. 16a to Fig. 16d, the battery pack 200 may use the battery pack in Embodiment 1. The battery pack 200 is formed by arranging a plurality of prismatic cells 300 connected in parallel. The battery pack 200 is provided with a fixing assembly 201 for connecting and fixing the prismatic cells 300 side by side to form the battery pack 200. The fixing assembly 201 includes a first assembly member 201a and a second assembly member 201b. The first assembly member 201a is fixedly connected to a side wall of the barrel of the prismatic cell and is configured to fix the plurality of prismatic cells arranged side by side as a whole. The second assembly member 201b is positioned below the plurality of prismatic cells arranged side by side and is fixedly connected to the lower cover plate of the prismatic cell. The battery pack 200 is further provided with the heat exchange assembly to achieve heat exchange between the battery pack and the temperature control apparatus.

in the embodiment, as the energy source of the energy storage device uses the plurality of battery packs, and one battery pack includes the plurality of prismatic cells, the series structure between the battery packs and the parallel connection manner of all the prismatic cells in the battery packs are the key to normal operation of the energy storage device. In the embodiment, the battery packs are connected in series by two electrical connectors, and the electrical connectors may also achieve parallel connection of all the prismatic cells in the battery packs, thereby simplifying the circuit connection structure of the battery packs.

As shown in Fig. 16a and Fig. 16c, each battery pack is provided with two electrical connectors 700. One electrical connector 700 is electrically connected to all positive electrode terminals 31a of all the prismatic cells 300 on the battery pack 200, and the other electrical connector 700 is connected to all negative electrode terminals 31b of all the prismatic cells 300 on the battery pack 200. By means of the two electrical connectors, in all the prismatic cells on the same battery pack 200, positive electrodes are connected uniformly and negative electrodes are connected uniformly, so that parallel connection between all the prismatic cells 300 in the battery pack 200 is achieved. The electrical connector 700 connected to the positive electrode terminals 31a on one battery pack 200 is connected to the electrical connector 700 connected to the negative electrode terminals 31b on the adjacent another battery pack 200, to connect the two adjacent battery packs 200 in series. By means of the electrical connectors, in all the prismatic cells on the same battery pack, the positive electrodes are connected uniformly and the negative electrodes are connected uniformly, so that parallel connection between all the prismatic cells in the battery pack is achieved.

**The** electrical connector 700 may be formed in a straight flat plate structure, but such a structure is not convenient for connecting two adjacent battery packs 200 in series, and the electrical connector of the flat plate structure also has unsatisfactory strength and stiffness. Therefore, in the embodiment, the electrical connector in a structural form as shown in Fig. 17 is used:
As shown in Fig. 17, the electrical connector 700 includes a first connecting portion 701 and a second connecting portion 702. With reference to Fig. 16c, the first connecting portion 701 is electrically connected to all the positive electrode terminals 31a on the battery pack 200; the second connecting portion 702 is electrically connected to the second connecting portion 702 of the electrical connector 700 arranged on the adjacent another battery pack 200; and the first connecting portion 701 of the electrical connector 700 arranged on the other battery pack 200 is electrically connected to all the negative electrode terminals 31b on the battery pack 200, thereby connecting the adjacent battery packs in series. Or, the first connecting portion 701 is electrically connected to all the negative electrode terminals 31b on the battery pack 200; the second connecting portion 702 is electrically connected to the second connecting portion 702 of the electrical connector 700 arranged on the adjacent another battery pack 200; and the first connecting portion 701 of the electrical connector 700 arranged on the other battery pack 200 is electrically connected to all the positive electrode terminals 31a on the battery pack 200, thereby connecting the adjacent battery packs in series. The first connecting portion 701 and the second connecting portion 702 further refine functional areas of the electrical connector 700. The first connecting portion 701 is configured to connect all the prismatic cells 300 in the same battery pack 200 in parallel, and the second connecting portion 702 achieves series connection between a plurality of battery packs 200. Therefore, a connecting structure between the battery packs 200 is simplified, a current carrying area of electric connection between the battery packs 200 is increased, an additional connecting apparatus arranged between the battery packs 200 is saved, the structure is simple, and the effect is good.

Referring to Fig. 17, in some embodiments, the electrical connector 700 is further provided with a buffer groove 703. The buffer groove 703 is formed along a length direction of the first connecting portion 701 on one side of the first connecting portion 701 near the second connecting portion 702. When the placement positions of the battery packs 200 have a slight error and adjacent battery packs 200 cannot be connected in series, the buffer groove 703 may be slightly adjusted to compensate for the position error, thereby avoiding repeated movement of the battery packs, and providing a buffer space for bumps or slight displacement during transportation. The buffer groove 703 is formed by a bending or stamping process, and the cross section of the buffer groove is U-shaped or arc-shaped. The bending or stamping process has low cost, simple technology, and good usage effect.

In some implementations, to tightly connect two electrical connectors 700, a plurality of connecting holes 704 are formed in the second connecting portion, and the two electrical connectors are fixedly connected by inserting bolts into the connecting holes 704, thereby improving the tightness of conductive connection between adjacent battery packs 200 and strengthens series assembly of the battery packs.

In addition to that two electrical connectors 700 are used in the embodiment to achieve both series connection between the battery packs 200 and parallel connection of all the prismatic cells 300 in the battery packs 200, in some embodiments, the series connection between the battery packs 200 and the parallel connection of all the prismatic cells 300 in the battery packs 200 may be achieved by two connection manners independent of each other. In the embodiment, the series connection between the battery packs 200 may be achieved by a copper cable, copper bar, or aluminum bar; and the parallel connection of all the prismatic cells 300 may be achieved by connecting the positive electrodes and negative electrodes of all the prismatic cells 300 separately by two busbars. However, such a manner may lead to cumbersome and complex circuit connections.

In the embodiment, the battery pack 200 and the temperature control apparatus exchange heat through the heat exchange assembly. The basic principle is that: the battery pack 200 is cooled by transferring heat of each prismatic cell 300 from the positive and negative electrodes thereof to the temperature control apparatus through the heat exchange assembly for heat dissipation, or the battery pack 200 is heated by transferring high heat of the temperature control apparatus to the prismatic cells 300 in the battery pack 200 through the heat exchange assembly for heating. Therefore, insulation, heat exchange effect, and heat exchange ability are primary factors to be considered when the heat exchange assembly and the temperature control apparatus are designed.

The heat exchange assembly in the embodiment includes primary heat exchange pipes 804, secondary heat exchange pipes 510, and insulation heat exchange members. First portions of the primary heat exchange pipes 804 are connected to all positive electrode terminals 31a or negative electrode terminals 31b on the battery pack 200, second portions of the primary heat exchange pipes 804 perform insulated heat exchange with first portions of the secondary heat exchange pipes 510 via the insulation heat exchange members, and second portions of the secondary heat exchange pipes 510 are connected to the temperature control apparatus.

To ensure the effect of primary heat exchange, heat pipes are used as the primary heat exchange pipes 804. A heat pipes is an evaporative condensation type heat exchange device that transfers heat via changes in the state of a working medium in the pipe. Liquid cooling pipes are used as the secondary heat exchange pipes 510. A liquid cooling medium is water or other liquid media that are relatively inexpensive and have a good heat conduction effect.

As shown in Fig. 16c, in the embodiment, the primary heat exchange pipes 804 are four heat pipes. Two of the heat pipes are connected to the positive electrode terminals 31a of all the prismatic cells in the battery pack, and the other two heat pipes are connected to the negative electrode terminals 31b of all the prismatic cells in the battery pack, thereby ensuring uniform heat distribution of all the prismatic cells 300 in the battery pack 200.

In some other implementations, the primary heat exchange pipes 804 are two heat pipes. One of the heat pipes is connected to the positive electrode terminals 31a of all the prismatic cells, and the other heat pipe is connected to the negative electrode terminals 31b of all the prismatic cells, thereby ensuring uniform heat distribution of all the prismatic cells 300 in the battery pack 200.

To further improve the primary heat exchange effect and mounting reliability, the second portions of the primary heat exchange pipes 804 in the embodiment are fixed to the electrode terminals by clamping. Therefore, slots 310 are formed in the positive and negative electrode terminals of the prismatic cells.

In the embodiment, with respect to the prismatic cell 300 used in the battery pack 200, an electrode terminal structure with the slot 310 will be described in detail below.

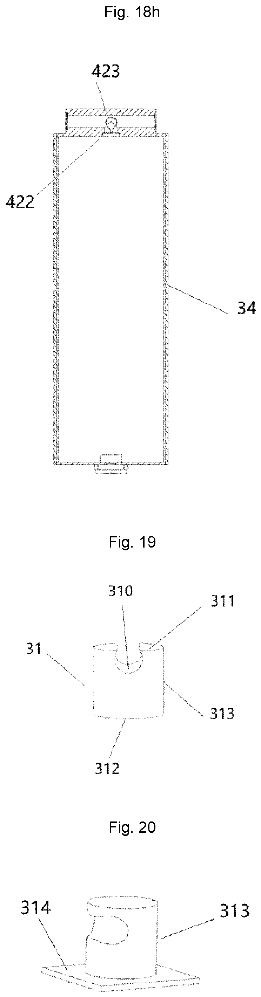

As shown in Fig. 19, an electrode terminal 31 in the embodiment is arranged on an upper cover plate 32 of a prismatic cell 300. The electrode terminal 31 is a column including a first end face 311, a second end face 312, and a side wall 313. At least one slot 310 is formed in the first end face 311 or the side wall 313 for mounting the primary heat exchange pipe 804, i.e., the opening of the slot 310 is on the first end face 311 or the side wall 313. An electric connection area is arranged on the first end face 311 and used to connect the electrical connector 700, and the second end face 312 is configured to arrange a conductive connection seat 314 to be electrically connected to an electrode assembly in the cell case.

As shown in Fig. 20, in the embodiment, the conductive connection seat 314 is a conductive connection sheet having a thickness of 2-3 mm and a rectangular shape, and may also have a different shape according to different needs. The conductive connection seats for a positive electrode terminal 31a and a negative electrode terminal 31b are made of different materials. In the embodiment, the positive electrode terminal is made of an aluminum sheet and the negative electrode terminal is made of a copper sheet. If the electrode terminals are made of aluminum, the conductive connection seats 314 may be integrally formed with the positive electrode terminal, and fixed with the negative electrode terminal by welding or clamping. The specific fixing manner varies depending on the material selected for the electrode terminal or the conductive connection sheet. Also, a copper sheet may be added, to the integrally formed electrode terminal and conductive connection sheet made of aluminum, as a conductive connection sheet for the negative electrode terminal.

Fig. 20 is a schematic structural diagram of an electrode terminal of a different form connected to the conductive connection seat 314 in the embodiment. In different implementations, the cross section of the slot 310 is C-shaped or U-shaped. In the slot having a C-shaped cross section, the width of the opening is less than that of the widest point of the slot. Such design is favorable for clamping the primary heat exchange pipe 804 in the slot 310 in an interference fit manner. The radians formed at two ends of the C-shaped slot have natural tension, and are favorable for tightly clamping the primary heat exchange pipe in the slot. In the slot having a U-shaped cross section, the width of the opening is slightly less than that of the widest point of the slot. Such design is convenient for placing the primary heat exchange pipe 804, and is able to provide a sufficient operating space for flattening or more tightly attaching the primary heat exchange pipe 804 to the slot 310 using a special tool.

In some implementations, the slot 310 may be formed in the first end face 311 of the electrode terminal. Then, except the gap at the opening of the slot, the first end face 311 is completely used as the electric connection area for connection with the electrical connector 700. The slot 310 may also be formed in the side wall 313 of the electrode terminal. Then, the first end face 311 is completely used as the electric connection area for connection with the electrical connector 700. When the opening of the slot 310 is formed in the side wall 313, two slots may be formed in the side wall of the electrode terminal, to increase the number of the primary heat exchange pipes that are placed, and improve the heat transfer efficiency of the electrode terminal.

When the area of the electric connection area is too small, the current carrying area of the electrode terminal is reduced and the temperature of the electrode terminal may be increased. In some implementations, to increase the area of the electric connection area, the slot 310 is eccentrically arranged. The slot 310 separates the first end face into a first area and a second area. The first area is used as the electric connection area, and the area of the first area accounts for not less than 50% of the area of the first end face. Such design effectively increases the area of the electric connection area, and increases the current carrying area. It should be noted that the area of the first end face includes the area reduced due to the opening of the slot, i.e., the area of the first end face is equal to the area of the second end face.

The horizontal cross section of the electrode terminal having the slot 310 may be circular, rectangular or racetrack-shaped. Electrode terminals of different shapes may be selected depending on different battery models, and other shapes may also be used, which will not be exhaustively listed in the embodiment.

In the embodiment, the second end face 312 of the electrode terminal is close to the electrode assembly, so the second end face 312 is closer to the electrode assembly in the cell, and the primary heat exchange pipe is to be arranged as close as possible to the second end face 312. To adapt to most prismatic cells commonly used on the market, in the embodiment, the height of the electrode terminal is 20-25 mm, and the distance from the lowest point of the slot to the second end face 312 of the electrode terminal is 7-12 mm. Such arrangement may make the primary heat exchange pipe as close as possible to the inside of the cell for heat transfer. When the diameter of the primary heat exchange pipe is too smaller than that of the slot, the primary heat exchange pipe cannot be in close contact with the slot. When the diameter of the primary heat exchange pipe is too larger than that of the slot, the primary heat exchange pipe is difficult to mount. Therefore, the ratio of the diameter of the primary heat exchange pipe to the widest point of the slot is (1:1.05) to (1:1.1). In the embodiment, when the diameter of the primary heat exchange pipe is φ10, the diameter of the primary heat exchange pipe is 10 mm, and the widest point of the slot is 10.5-11mm. Thus, the primary heat exchange pipe may be conveniently placed in the slot, and then tightly pressed and closely attached to the slot to improve the heat transfer efficiency. In some implementations, the depth of the slot is less than the diameter of the primary heat exchange pipe, so that the primary heat exchange pipe slightly protrudes out of the surface of the electrode terminal, which is favorable for tightly pressing and flattening the primary heat exchange pipe to be in close contact with the slot.

By forming the slot in the electrode terminal and placing the primary heat exchange pipe in the slot, the temperature of the electrode terminal may be effectively controlled. Further, by arranging the electric connection area on the first end face of the electrode terminal, the electrical connector 700 may be mounted on the electric connection area to achieve parallel connection of a plurality of prismatic cells. The embodiment is simple in structure, highly practical, and easy to operate, may balance the heat of the battery pack, and has a good heat dissipation effect and low cost.

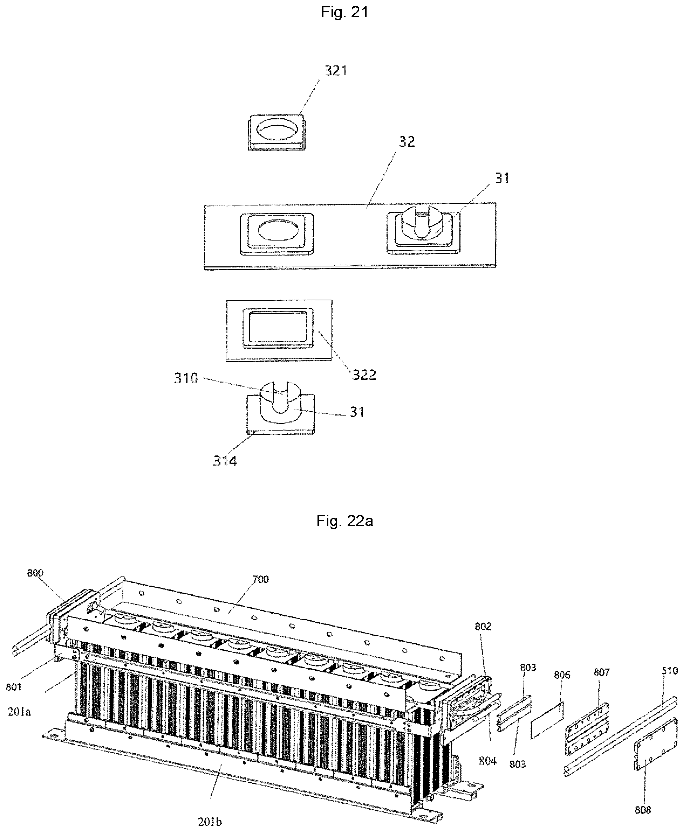

As shown in Fig. 21, the electrode terminal 31 is fixed to the upper cover plate 32. To insulate the electrode terminal 31 from the upper cover plate 32, a first insulating member 321 and a second insulating member 322 are also arranged. The first insulating member 321 is arranged above the upper cover plate 32, the second insulating member 322 is arranged below the upper cover plate 32, and the electrode terminal 31 passes through the second insulating member 322, the upper cover plate 32, and the first insulating member 321 sequentially and then is fixed to the upper cover plate 32.

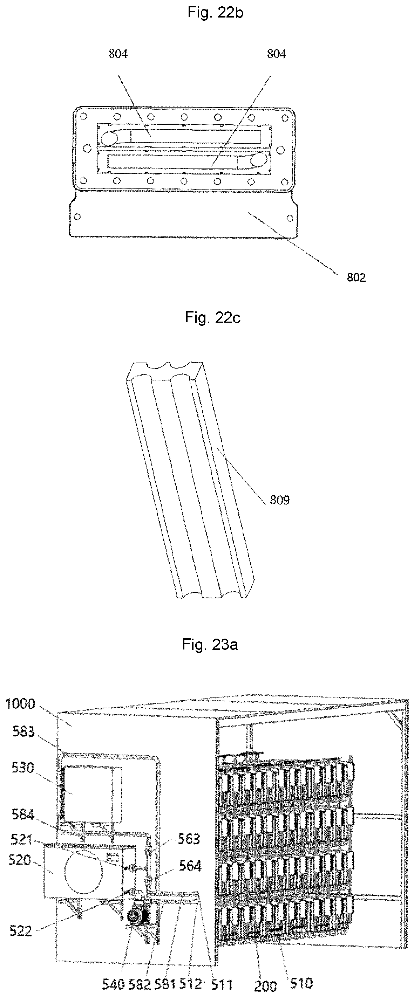

As shown in Fig. 22a, Fig. 22b, and Fig. 22c, structures of the insulation heat exchange members used in the embodiment, as well as a specific connection relationship with the primary heat exchange pipes and the secondary heat exchange pipes 510 are as follows:
The insulation heat exchange members 800 are fixed to first assembly members 201a on two sides of the battery pack 200 via insulation heat exchange member fixing seats 801. In the embodiment, two primary heat exchange pipes 804 and two secondary heat exchange pipes 510 are arranged at the respective two ends of the battery pack 200, and thus the insulation heat exchange members 800 include two heat conducting slots and two heat exchange slots. The number of the heat conducting slots is the same as the number of the primary heat exchange pipes 804, and the number of the heat exchange slots is the same as the number of the secondary heat exchange pipes 510. A first insulation heat conducting sheet 806 is arranged between the heat conducting slot and the heat exchange slot.

As shown in Fig. 22b, the two heat conducting slots are arranged in parallel, and fix first portions of the two primary heat exchange pipes 804 respectively, so that the two primary heat exchange pipes 804 are insulated and heat conducted. The heat conducting slots are formed by fastening the first mounting member 802 having a groove with two second mounting members 803. Through holes are formed in two ends of the first mounting member 802. The first portions of the primary heat exchange pipes pass through the through holes and then enter the heat conducting slots, and adhere as close as possible to the first mounting member 802 and the second mounting members 803 in the heat conducting slots. The length of the heat conducting slots is as close as possible to the length of the first mounting member 802 and the second mounting members 803, thereby improving the heat exchange efficiency. A heat conducting adhesive and the like may also be applied to a contact surface to further improve the heat conduction efficiency.

To achieve uniform heat distribution among the battery packs in the system, one of the two secondary heat exchange pipes 510 is a water inlet pipe and the other is a water outlet pipe. Therefore, two parallel slots are used as the heat exchange slots to fix the two secondary heat exchange pipes 510.

The heat exchange slots are formed by fastening a third mounting member 807 having a groove and a fourth mounting member 808. The third mounting member 807 is attached to the first insulation heat conducting sheet 806. The shapes of the third mounting member 807 and the fourth mounting member 808 are rectangular, elliptical, circular, or trapezoidal, and a mounting surface is not required to be flat, but may also be curved, as long as the secondary heat exchange pipes 510 may be fixed. The heat exchange slots are in middle seams formed by the third mounting member 807 and the fourth mounting member 808 that are fitted, and the heat exchange slots are to be as close as possible to the secondary heat exchange pipes 510. A heat conducting adhesive may also be applied to a bonding surface to fully transfer heat from the secondary heat exchange pipes 510 to the third mounting member 807, or to further transfer heat from the first insulation heat conducting sheet 806 to the third mounting member 807, and then transfer the heat to the secondary heat exchange pipes 510 via the third mounting member 807. The heat is treated by an external heat treatment apparatus connected to the secondary heat exchange pipes 510. A plurality of battery packs in the energy storage device use one or more sets of secondary heat exchange pipes 510, and the battery packs in the same layer or column may use the same set of secondary heat exchange pipes 510.

In some embodiments, the second mounting members 803, the first insulation heat conducting sheet 806, and the third mounting member 807 may be combined into a second insulation heat conducting sheet 809 as shown in Fig. 22c. Grooves are formed in two sides of the second insulation heat conducting sheet 809, one side of which may be fitted with the groove of the first mounting member 802 to place the primary heat pipes, and the other side may be fitted with the fourth mounting member 808 to place the secondary heat exchange pipes 510. The second insulation heat conducting sheet 809 may save assembly procedures and further improve the heat exchange efficiency of the insulation heat exchange member 800.

In some implementations, the first mounting member 802, the second mounting member 803, the third mounting member 807, and the fourth mounting member 808 have various connecting and mounting fixing manners, In the embodiment:
The first insulation heat conducting sheet 806 is clamped by the second mounting member 803 and the third mounting member 807; the second mounting member 803 is embedded into and fastened with the first mounting member 802; the third mounting member 807 is embedded into and fastened with the fourth mounting member 808; and fixing holes are formed in the first mounting member 802 and the fourth mounting member 808, so that fixing bolts penetrate through the fixing holes in the fourth mounting member 808 and the first mounting member 802 sequentially and are fixedly connected to the insulation heat exchange member fixing seat 801. Or, the second mounting member 803 is embedded into and fastened with the first mounting member 802; and fixing holes are formed in the first mounting member 802, the third mounting member 807, and the fourth mounting member 808, so that fixing bolts penetrate through the fixing holes in the fourth mounting member 808, the third mounting member 807, and the first mounting member 802 sequentially and are fixedly connected to the insulation heat exchange member fixing seat 801. Or, the second mounting member 803 is embedded into and fastened with the first mounting member 802; a group of first fixing holes are formed in the first mounting member 802 and the third mounting member 807 respectively; a group of second fixing holes are formed in the first mounting member 802, the third mounting member 807, and the fourth mounting member 808 respectively; and after a group of first fixing bolts penetrate through the first fixing holes to fixedly connect the third mounting member 807 and the first mounting member 802 to the cell case, another group of second fixing bolts penetrate through the second fixing holes in the fourth mounting member 808, the third mounting member 807, and the first mounting member 802 sequentially and are fixedly connected to the cell case. Such arrangement allows the fourth mounting member 808 on the battery pack 200 to be easily disassembled independently.

The shapes of the first mounting member 802, the second mounting member 803, the third mounting member 807, and the fourth mounting member 808 are rectangular, elliptical, circular, or trapezoidal, and a mounting surface is not required to be flat, but may also be curved, as long as the heat transfer pipe may be fixed to the cell case and a good heat transfer effect is ensured. The grooves in the first mounting member 802, the second mounting member 803, the third mounting member 807, and the fourth mounting member 808 are semi-circular grooves or arch-shaped grooves, which are to press tightly against the pipes in the grooves. The first insulation heat conducting sheet 806 is one of a silicone heat conducting film, an alumina ceramic plate, a silicon nitride ceramic plate, a zirconia ceramic plate, a silicon carbide ceramic plate, a magnesium oxide ceramic plate, a boron nitride ceramic plate, an aluminum nitride ceramic plate, and a beryllium oxide ceramic plate. The first mounting member 802 is an insulation mounting member, and may be used regardless of whether the cell case is made of metal or an insulating material. The second mounting member 803 is a metal mounting member and is favorable for heat conduction and electric conduction. The third mounting member 807 is a metal mounting member and is favorable for heat conduction. The fourth mounting member 808 is a metal mounting member or an insulation mounting member, and is not clearly required in the material thereof for heat conduction or insulation. The metal mounting member is an aluminum alloy mounting member.

In addition to the heat exchange assembly using a two-stage heat exchange mechanism including the primary heat exchange pipes 804, the secondary heat exchange pipes 510, and the insulation heat exchange members in the embodiment, a heat exchange assembly using a one-stage heat exchange mechanism may also be used in some other embodiments. A specific structure of the heat exchange assembly is:
The heat exchange assembly includes primary heat exchange pipes 804, and the battery pack 200 and the temperature control apparatus 500 exchange heat by only the primary heat exchange pipes 804. The primary heat exchange pipes 804 may be liquid cooling pipes or heat pipes.

However, the material of the liquid cooling pipe is selected from insulation plastic pipes, which have good insulation but low heat exchange efficiency. When metal pipes are used as the material of the liquid cooling pipe, although the heat exchange performance is improved, the insulation effect is difficult to guarantee. Use of the liquid cooling pipe may also pose safety hazards due to leakage of a liquid cooling medium caused by poor sealing.

Based on the above problem, the primary heat exchange pipe 804 may also be a heat pipe. The heat exchange effect of the heat pipe is better. However, in the embodiment, the heat pipe needs to be connected to the positive and negative electrode terminals of the prismatic cell 300. As the material of the heat pipe is usually copper, insulation issues also need to be considered. Measures for solving the insulation issues are to arrange insulating films between the heat pipe and the positive and negative electrode terminals of the prismatic cell 300, or to provide insulation at the connection position between the heat pipe and the temperature control apparatus 500.

When the heat pipe is used as the primary heat exchange pipe 804, although the heat exchange efficiency is high, the heat pipe has a limited length and relatively limited application scenarios. Moreover, a temperature control apparatus that may be matched with the heat pipe and has cooling and heating abilities is a TEC. The TEC has limited cooling and heating abilities. Thus, based on the limited length of the heat pipe and the characteristics of the TEC, the heat exchange assembly is only suitable for situations where relatively few battery packs are used in an energy storage device.

In the embodiment, as the heat exchange assembly uses the two-stage heat exchange manner and the secondary heat exchange pipe 510 is a liquid cooling pipe, the temperature control apparatus described below is used in the embodiment. The basic structural principle is: the temperature control apparatus includes a cooling and heating machine, a radiator, a circulating pump, and a control valve assembly. The cooling and heating machine is configured to actively heat or cool a medium in the secondary heat exchange pipe 510. A liquid inlet of the cooling and heating machine is connected to an outlet of the secondary heat exchange pipe 510 through a first pipeline, and a liquid outlet of the cooling and heating machine is connected to an inlet of the secondary heat exchange pipe 510 through a second pipeline. The radiator is connected to the first or second pipeline and used to passively cool the medium in the secondary heat exchange pipe 510. The circulating pump is arranged on the first or second pipeline and used to provide power for the medium in the secondary heat exchange pipe 510 to flow. The control valve assembly is arranged on the first or second pipeline and used to control the cooling and heating machine to be communicated with the radiator to achieve passive cooling of the medium. Or, the control valve assembly controls the cooling and heating machine to be disconnected from the radiator, and the medium only flows into the cooling and heating machine to achieve active heating or active cooling.

Based on the above basic structural frame of the temperature control apparatus, temperature control apparatuses 500 having various specific structures may be designed, in the embodiment:
Fig. 23a shows a first implementation designed based on a basic structural principle of the temperature control apparatus. The temperature control apparatus includes a cooling and heating machine 520, a radiator 530, a circulating pump 540, and a control valve assembly. The secondary heat exchange pipe 510 is configured to exchange heat with the battery pack 200 in the box 1000. The cooling and heating machine 520 is configured to actively heat or cool a medium in the secondary heat exchange pipe 510. A liquid inlet 521 of the cooling and heating machine 520 is connected to an outlet 511 of the secondary heat exchange pipe 510 through a first pipeline 581, and a liquid outlet 522 of the cooling and heating machine 520 is connected to an inlet 512 of the secondary heat exchange pipe 510 through a second pipeline 582. The radiator 530 is connected to the first pipeline 581 in parallel and used to passively cool the medium in the secondary heat exchange pipe 510. When connected, an inlet of the radiator 530 is communicated with the first pipeline 581 via a third pipeline 583, and an outlet of the radiator is communicated with the first pipeline 581 via a fourth pipeline 584. The circulating pump 540 is arranged on the second pipeline 582 and used to provide power for the medium to flow. The control valve assembly is configured to control the cooling and heating machine 520 to be communicated with the radiator 530 to achieve passive cooling of the medium. Or, the control valve assembly controls the cooling and heating machine 520 to be disconnected from the radiator 530, and the medium only flows into the cooling and heating machine 520 to achieve active heating or active cooling.

In the above temperature control apparatus 500, the secondary heat exchange pipe 510, the first pipeline 581, and the second pipeline 582 may be formed by one pipeline, i.e., the secondary heat exchange pipe 510, the first pipeline 581, and the second pipeline 582 are an integrated pipeline. Such a structural form makes the pipeline joints fewer, and makes a system relatively simple and convenient to mount and disassemble. In the temperature control apparatus 500, the control valve assembly may use valves having different control manners or structures, as long as the valves may control the flowing/cutoff of the medium. In the embodiment, pneumatic valves, electric valves, hydraulic valves, and the like may be used. To facilitate control, electric valves are preferred, which are easy to control, operate, and mount on site. In the embodiment, the control valve assembly includes a first electric valve 563 and a second electric valve 564. The first electric valve 563 is arranged at the outlet of the radiator 530, i.e., on the fourth pipeline 584. The second electric valve 564 is arranged on the first pipeline 581 and positioned behind the inlet of the third pipeline 583. The first electric valve 563 and the second electric valve 564 are controlled by the BMS of the battery. The BMS controls the working state of the first electric valve 563 and the second electric valve 564 based on the collected battery temperature.

The working principle of the temperature control apparatus 500 is that when the temperature of the battery pack 200 is too high, the first electric valve 563 is switched on and the second electric valve 564 is switched off, and the medium in the secondary heat exchange pipe 510 exchanges heat with the battery pack 200. Then, the medium in the secondary heat exchange pipe 510 enters the radiator 530 through the first pipeline 581, and the radiator 530 treats the heat in the medium. Then, the cooled medium enters the cooling and heating machine 520 and is circulated by the circulating pump 540. At this time, the cooling and heating machine 520 does not work, and the cooled medium returns to the secondary heat exchange pipe 510 in the box 1000 through the second pipeline 582, and exchanges heat with the battery pack 200, thereby achieving passive cooling by the radiator 530.

When the temperature of the battery pack 200 exceeds a threshold, the first electric valve 563 is switched off, the second electric valve 564 is switched on, and the secondary heat exchange pipe 510 exchanges heat with the battery pack 200. Then, the medium in the secondary heat exchange pipe 510 enters the cooling and heating machine 520 through the first pipeline 581. At this time, the cooling and heating machine 520 works and the medium is circulated by the circulating pump 540 to cool the medium. Then, the cooled medium returns to the secondary heat exchange pipe 510 in the box 1000 through the second pipeline 582, and exchanges heat with the battery pack 200, thereby achieving active cooling by the cooling and heating machine 520.

When the temperature of the battery pack 200 is too low, the first electric valve 563 is switched off, the second electric valve 564 is switched on, the cooling and heating machine 520 works, and the medium is circulated by the circulating pump 540 to heat the medium. The heated medium returns to the secondary heat exchange pipe 510 in the box 1000 through the second pipeline 582, and exchanges heat with the battery pack 200, thereby achieving active heating by the cooling and heating machine 520.

The system in the embodiment performs combined type active heat dissipation, active heating, and passive heat dissipation for the battery pack 200 by the cooling and heating machine 520 and the radiator 530. Such a manner may ensure that the heat of the battery pack 200 may be effectively released, and the temperature control cost is relatively low, thereby effectively saving energy, avoiding wasting energy when only active cooling is used, and also avoiding the defect that the temperature of the battery pack 200 cannot be controlled in a timely manner when only passive cooling is used.

Based on the temperature control apparatus, an electrical control box 570 may also be arranged, and may be a conventional electrical control cabinet. The electrical control box 570 is connected to the cooling and heating machine 520, the circulating pump 540, and the control valve assembly respectively. The electrical control box 570 may control the working state of the cooling and heating machine 520, the circulating pump 540, and the control valve assembly in a timely manner, and avoid control delays caused when the BMS host or BMS slaves control the cooling and heating machine 520, the circulating pump 540, and the control valve assembly. Also, the electrical control box 570 may operate the cooling and heating machine 520, the circulating pump 540, and the control valve assembly on site, and is convenient to operate.

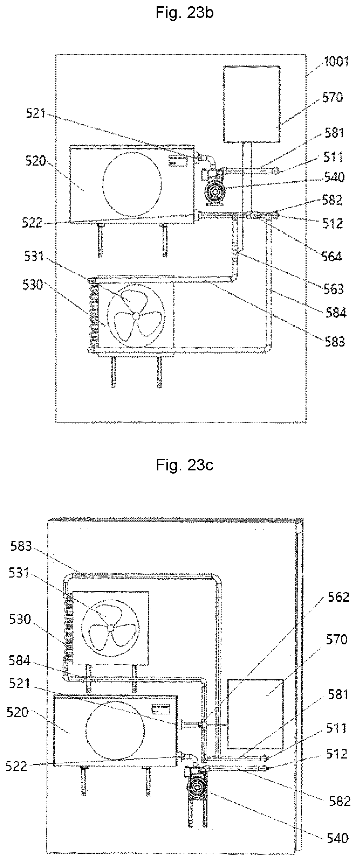

Fig. 23b shows a second implementation designed based on the basic structural principle of the temperature control apparatus. The temperature control apparatus 500 includes a secondary heat exchange pipe 510 (not shown in Fig. 23b), a cooling and heating machine 520, a radiator 530, a circulating pump 540, a control valve assembly, and an electrical control box 570. The secondary heat exchange pipe 510 is configured to exchange heat with the battery pack 200 in the box 1000. The cooling and heating machine 520 is configured to actively heat or cool a medium in the secondary heat exchange pipe 510. A liquid inlet 521 of the cooling and heating machine 520 is connected to an outlet 511 of the secondary heat exchange pipe 510 through a first pipeline 581, and a liquid outlet 522 of the cooling and heating machine 520 is connected to an inlet 512 of the secondary heat exchange pipe 510 through a second pipeline 582. The radiator 530 is connected to the second pipeline 582 in parallel and used to passively cool the medium in the secondary heat exchange pipe 510. When connected, an inlet of the radiator 530 is communicated with the second pipeline 582 via a third pipeline 583, and an outlet of the radiator is communicated with the second pipeline 582 via a fourth pipeline 584. The circulating pump 540 is arranged on the first pipeline 581 and used to provide power for the medium to flow. In other embodiments, the circulating pump 540 may also be arranged on the second pipeline 582, as long as the circulating pump may provide power for the medium to flow. The electrical control box 570 is connected to the cooling and heating machine 520, the circulating pump 540, and the control valve assembly respectively, and used to control the working state of the cooling and heating machine 520, the circulating pump 540, and the control valve assembly respectively. A fan 531 is also arranged on the outer side of the radiator 530, and dissipates heat from the medium in the radiator 530.

The inlet 512 and outlet 511 of the secondary heat exchange pipe 510 are both arranged outside the box 1000, and are connected to the first pipeline 581 and the second pipeline 582 outside the box 1000. The secondary heat exchange pipe 510 in the box 1000 is a one-way circulating pipe, and the one-way circulating pipe exchanges heat with a plurality of battery packs 200 in the box 1000. Such a manner simplifies the structure of the temperature control part in the box, without complex temperature control structures in the box, making the layout of components in the box simpler and more convenient. Moreover, except the secondary heat exchange pipe 510 which is arranged in the box, other components of the battery temperature control apparatus are all arranged outside the battery pack 200, achieving the characteristics of simple structure, relatively low cost, no occupation of space, and the like.

In the temperature control apparatus, the control valve assembly is configured to control the cooling and heating machine 520 to be communicated with the radiator 530 to achieve passive cooling of the medium. Or, the control valve assembly controls the cooling and heating machine 520 to be disconnected from the radiator 530, and the medium only flows into the cooling and heating machine 520 to achieve active heating or active cooling. A first electric valve 563 is arranged at the inlet of the radiator 530 on the third pipeline 583, and a second electric valve 564 is arranged on the second pipeline 582. When the temperature of the battery pack 200 is too high, the first electric valve 563 is switched on and the second electric valve 564 is switched off, and the medium in the secondary heat exchange pipe 510 exchanges heat with the battery pack 200. Then, the medium in the secondary heat exchange pipe 510 enters the cooling and heating machine 520 through the first pipeline 581. At this time, the cooling and heating machine 520 does not work and the medium is circulated by the circulating pump 540. Then, the uncooled medium enters the radiator 530 and the radiator 530 treats the heat in the medium. The cooled medium returns to the secondary heat exchange pipe 510 in the box 1000 through the second pipeline 582, and exchanges heat with the battery pack 200, thereby achieving passive cooling by the radiator 530.

When the temperature of the battery pack 200 exceeds a threshold, the first electric valve 563 is switched off, the second electric valve 564 is switched on, and the secondary heat exchange pipe 510 exchanges heat with the battery pack 200. Then, the medium in the secondary heat exchange pipe 510 enters the cooling and heating machine 520 through the first pipeline 581. At this time, the cooling and heating machine 520 works to cool the medium and the medium is circulated by the circulating pump 540. Then, the cooled medium returns to the secondary heat exchange pipe 510 in the box 1000 through the second pipeline 582. When the temperature of the battery pack 200 is too low, the first electric valve 563 is switched off, the second electric valve 564 is switched on, the cooling and heating machine 520 works to heat the medium, and the medium is circulated by the circulating pump 540. Then, the heated medium returns to the secondary heat exchange pipe 510 in the box 1000 through the second pipeline 582, and exchanges heat with the battery pack 200, thereby achieving active heating by the cooling and heating machine 520.

Fig. 23c shows a third implementation designed based on the basic structural principle of the temperature control apparatus. Different from the above two types of temperature control apparatuses, the first electric valve and the second electric valve in the control valve assembly are replaced with a three-way electric valve. A first port of the three-way electric valve 562 is communicated with the liquid inlet 521 of the cooling and heating machine 520, a second port is communicated with the first pipeline 581, and a third port is communicated with an outlet of the radiator 530, i.e., communicated with the fourth pipeline 584. When the three-way electric valve is used for control, only a single component is needed to achieve control, which is simple in structure and convenient to mount.

The principle of the control valve replaced with the three-way electric valve 562 is that when the temperature of the battery pack 200 is too high, the first port and third port of the three-way electric valve 562 are communicated, the second port is closed, and the medium in the secondary heat exchange pipe 510 exchanges heat with the battery pack 200. Then, the medium in the secondary heat exchange pipe 510 enters the radiator 530 through the first pipeline 581 and the third pipeline 583, and the radiator 530 treats the heat in the medium. Then, the cooled medium enters the cooling and heating machine 520 and is circulated by the circulating pump 540. At this time, the cooling and heating machine 520 does not work, but only allows the medium to pass through. Then, the cooled medium returns to the secondary heat exchange pipe 510 in the box 1000 through the second pipeline 582, and exchanges heat with the battery pack 200, thereby achieving passive cooling by the radiator 530.

When the temperature of the battery pack 200 exceeds a threshold, the first port and second port of the three-way electric valve are communicated, the third port is closed, and the secondary heat exchange pipe 510 exchanges heat with the battery pack 200. Then, the medium in the secondary heat exchange pipe 510 enters the cooling and heating machine 520 through the first pipeline 581. At this time, the cooling and heating machine 520 works to cool the medium and the medium is circulated by the circulating pump 540. Then, the cooled medium returns to the secondary heat exchange pipe 510 in the box 1000 through the second pipeline 582, and exchanges heat with the battery pack 200, thereby achieving active cooling by the cooling and heating machine 520.

When the temperature of the battery pack 200 is too low, the first port and second port of the three-way electric valve 562 are communicated, the third port is closed, the cooling and heating machine 520 works to heat the medium, and the medium is circulated by the circulating pump 540. Then, the heated medium returns to the secondary heat exchange pipe 510 in the box 1000 through the second pipeline 582, and exchanges heat with the battery pack 200, thereby achieving active heating by the cooling and heating machine 520. The system in the embodiment performs combined type active heat dissipation, active heating, and passive heat dissipation for the battery pack 200 by the cooling and heating machine 520 and the radiator 530. Such a manner may ensure that the heat of the battery pack 200 may be effectively treated, and the temperature control cost is relatively low, thereby avoiding wasting energy when only active cooling is used, and also avoiding the defect that the temperature of the battery pack 200 cannot be controlled in a timely manner when only passive cooling is used.

In the temperature control apparatus, the inlet 512 and outlet 511 of the secondary heat exchange pipe 510 are both arranged outside the box 1000, and are connected to the first pipeline 581 and the second pipeline 582 outside the box 1000. By arranging the inlet and outlet of the secondary heat exchange pipe 510 outside the box 1000, the secondary heat exchange pipe 510 is more convenient to mount, connect to and disassemble from the first pipeline 581 and the second pipeline 582. Such a manner avoids arrangement of pipeline connectors in the box, thereby avoiding the impact of medium leakage in the box on the battery. The secondary heat exchange pipe 510 in the box 1000 is a one-way circulating pipe, and the one-way circulating pipe exchanges heat with a plurality of battery packs 200 in the box 1000. The one-way circulating pipe may ensure that the secondary heat exchange pipe 510 has no leakage point in the box, and has good sealing performance during medium circulation, further avoiding the impact of medium leakage on the battery in the box.

In the temperature control apparatus, a fan 531 is also arranged on the outer side of the radiator 530, and further dissipates heat from the medium in the radiator 530. During charging and discharging, the battery pack 200 may generate a large amount of heat. To dissipate the heat and make the most of the ambient temperature, the fan 531 is arranged, thereby ensuring that the temperature of the battery pack 200 remains below 50°C even at high temperatures of 40°C. Control of the temperature of the battery pack 200 is mainly an issue of energy consumption. The use of air conditioning and other refrigeration devices results in high energy consumption, so the ambient temperature is used as much as possible to control the temperature of the battery pack 200. In the solution of the embodiment, the radiator 530 is configured to cool the battery pack 200 by using the ambient temperature under non-extreme temperature conditions. Only in extreme situations where the temperature is too high or too low, the cooling and heating machine 520 is started for heating or cooling, thereby maximizing use of the ambient temperature and reducing energy consumption for temperature control.

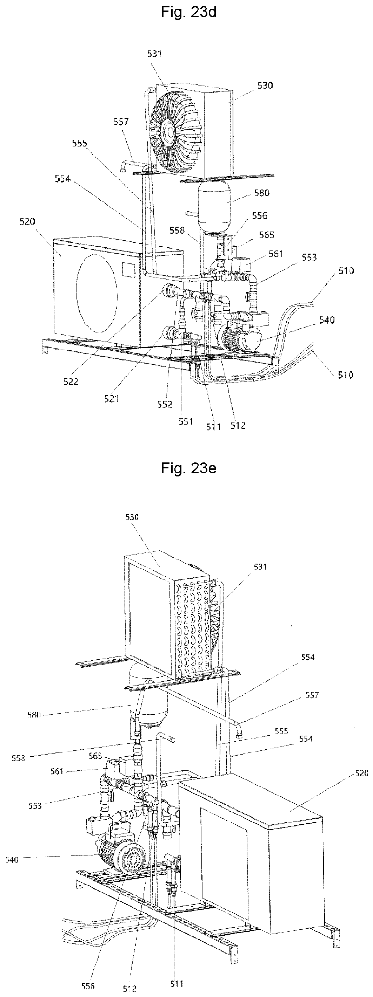

Fig. 23d and Fig. 23e show a fourth implementation designed based on the basic structural principle of the temperature control apparatus. A liquid inlet 521 of the cooling and heating machine 520 in the temperature control apparatus is connected to an outlet 511 of the secondary heat exchange pipe 510 through a first pipe section 551, and a liquid outlet 522 of the cooling and heating machine 520 is connected to a second pipe section 552. A circulating pump 540 is arranged on the second pipe section 552 and used to provide power for a circulating medium to flow. The circulating pump 540 is also connected to a third pipe section 553, the third pipe section 553 is connected to a water inlet of the radiator 530 through a fourth pipe section 554, and the third pipe section 553 is connected to a water outlet of the radiator 530 through a fifth pipe section 555. A first control valve 561 is arranged at a connection end between the third pipe section 553 and the fourth pipe section 554. The first control valve 561, in a first state, may open a channel between the third pipe section 553 and the fourth pipe section 554, and close a channel between the third pipe section 553 and the sixth pipe section 556. The first control valve 561, in a second state, may close a channel between the third pipe section 553 and the fourth pipe section 554, and open a channel between the third pipe section 553 and the sixth pipe section 556. The third pipe section 553 is also connected to the sixth pipe section 556, the sixth pipe section 556 is connected to the inlet 512 of the secondary heat exchange pipe 510, and the fifth pipe section 555 is connected to the sixth pipe section 556. The radiator 530 and the circulating pump 540 may also be arrangement on the first pipe section 551 or second pipe section 552, and may also achieve the function of providing power for the circulating medium. Then, the third pipe section 553 is directly connected to the first pipe section 551, so that the third pipe section 553 is connected to the radiator 530.

The working principle of the temperature control apparatus is: when the temperature of the battery pack 200 exceeds a first threshold, the first control valve 561 enters the first state, closes the channel between the third pipe section 553 and the sixth pipe section 556, and opens the channel between the third pipe section 553 and the fourth pipe section 554. The medium in the cooling and heating machine 520 is fed into the second pipe section 552 through the outlet 522. Since the first control valve 561 closes the channel between the third pipe section 553 and the sixth pipe section 556 in the first state, the cooling medium is pressurized by the circulating pump 540 and enters the radiator 530 through the third pipe section 553 and the fourth pipe section 554. An S-shaped or U-shaped pipeline is arranged in the radiator 530, and the cooling medium consumes and dissipates the heat thereof in the process of passing through the pipes. Following heat dissipation, the cooling medium is conveyed through the fifth pipe section 555 to the sixth pipe section 556, and enters the secondary heat exchange pipe 510 from the sixth pipe section 556. The cooling medium passes through the secondary heat exchange pipe 510, an insulation heat exchange member, and a primary heat exchange pipe, exchanges heat with the battery pack 200, and then enters the cooling and heating machine 520 through the first pipe section 551. The above process is continuously repeated to achieve passive cooling of the battery pack 200. When the temperature of the battery pack 200 does not exceed the first threshold, the cooling medium only passes through the pipeline in the cooling and heating machine, but the cooling and heating machine does not perform active cooling on the cooling medium. The first threshold is typically 30-40°C, and may be adjusted according to geography, environment, and individual needs.

When the temperature of the battery pack 200 exceeds a second threshold or the duration of passive cooling exceeds a third threshold, or both the second threshold and third threshold are exceeded, the first control valve 561 enters a second state. The channel between the third pipe section 553 and the fourth pipe section 554 is closed, the channel between the third pipe section 553 and the sixth pipe section 556 is opened, and the cooling and heating machine 520 is started to actively cool the cooling medium in the cooling and heating machine, and then conveys the cooling medium to the second pipe section 552 through the outlet 522. Since the channel between the third pipe section 553 and the fourth pipe section 554 is closed, the cooling medium is pressurized by the circulating pump 540 and then directly enters the sixth pipe section 556 through the third pipe section, and then is conveyed into the secondary heat exchange pipe 510 through the sixth pipe section 556. The cooling medium passes through the secondary heat exchange pipe 510, the insulation heat exchange member, and the primary heat exchange pipe and exchanges heat with the battery pack 200. Then, the cooling medium in the secondary heat exchange pipe 510 recirculates to the first pipe section 551 and enters the cooling and heating machine 520 for cooling. Then, the cooling and heating machine 520 works, and the medium is circulated by the circulating pump 540 to cool the medium. Then, the cooled medium returns into the secondary heat exchange pipe 510 in the box 1000 through the second pipe section 552, and is continuously circulated to repeat the above process to achieve active cooling of the battery pack 200. When the ambient temperature is lower than a fourth threshold, the battery pack 200 needs to be heated. Then, the cooling and heating machine 520 heats the medium in the secondary heat exchange pipe and repeats the above process to achieve active heating of a plurality of battery packs 200. The second threshold is typically 40-50°C, the third threshold is 20-60 minutes, and the fourth threshold is 5-15°C, which may be adjusted according to geography, environment, and individual needs.

In some implementations, an expansion tank 580 is also arranged on the third pipe section 553, and used to balance pipeline pressure and prevent excessive pressure in the pipeline from damaging the pipelines and control valves. The sixth pipe section 556 is also provided with a seventh pipe section 557, and the seventh pipe section 557 is connected to an inlet of a cooling tank 951 (used to cool thermal runaway smoke). The first pipe section 551 is also provided with an eighth pipe section 558, which is connected to an outlet of the cooling tank 951. A second control valve 565 is arranged on the seventh pipe section 557, and the seventh pipe section 557 is connected to the cooling tank 951 in a smoke control apparatus. When the cooling tank 951 needs to be opened, the second control valve 565 opens the channel of the seventh pipe section 557, and allows the cooling medium to enter the cooling tank 951. The cooling medium in the cooling tank 951 is conveyed into the cooling and heating machine 520 through the eighth pipe section 558. The cooling tank 951 is only used when the battery pack experiences thermal runaway, so the seventh pipe section 557 is normally in a closed state. In case of thermal runaway, the BMS sends an instruction to switch on the second control valve 565. Thus, the second control valve 565 is an electromagnetic valve, an electric valve, and the like. However, other control valves, including pneumatic valves, electric valves, and hydraulic valves, that may achieve the function of opening pipeline channels may also be used in the embodiment.

In some implementations, the secondary heat exchange pipe 510, the first pipe section 551, and the second pipe section 552 may be formed by one pipeline, i.e., the secondary heat exchange pipe 510, the first pipe section 551, and the second pipe section 552 are an integrated pipeline. Such a structural form makes the pipeline joints fewer, and makes a system relatively simple and convenient to mount and disassemble.

In some implementations, a fan 531 is also arranged on the outer side of the radiator 530, and used to aid the radiator 530 to further dissipate heat from the cooling medium. The embodiment uses a method of passively cooling an energy storage device using ambient temperature and actively cooling the energy storage device using the cooling and heating machine. In the battery pack 200, when the temperature exceeds the first threshold, passive cooling is initiated; when the temperature exceeds the second threshold or the duration of passive cooling exceeds the third threshold, active cooling is initiated; and when the temperature is lower than the fourth threshold, active heating is initiated. Such gradient temperature management and control, compared to traditional cooling and heating by air conditioning, may maximize use of ambient temperature and reduce energy consumption. The temperature control apparatus of the embodiment exchanges heat with the battery packs one by one, may not cause uneven temperature diffusion that occurs during cooling by air conditioning, and may reduce costs and save energy.

In some implementations, the temperature control apparatus further includes an electrical control box 570. The electrical control box 570 is connected to the cooling and heating machine 520, the circulating pump 540, and the control valve assembly respectively. The electrical control box 570 may control the working state of the cooling and heating machine 520, the circulating pump 540, and the control valve assembly in a timely manner, and avoid control delays of the BMS host. Also, the electrical control box 570 may operate the cooling and heating machine 520, the circulating pump 540, and the control valve assembly on site, and is convenient to operate.

It should be noted that in the temperature control apparatus in the fourth implementation, combination of the second pipe section, the third pipe section, and the fourth pipe section is equivalent to the first pipeline in the basic structure of the temperature control apparatus; the first pipe section is equivalent to the second pipeline in the basic structure of the temperature control apparatus; the fifth pipe section is equivalent to the third pipeline in the basic structure of the temperature control apparatus; and the sixth pipe section is equivalent to the fourth pipeline in the basic structure of the temperature control apparatus.

In the embodiment, the inlet 512 and outlet 511 of the secondary heat exchange pipe 510 are both arranged outside the box 1000, and are connected to the first pipe section 551 and the second pipe section 552 outside the box 1000. Such a manner avoids arrangement of pipeline connectors in the box 1000, facilitating mounting, maintenance, and disassembly, and also avoids the impact of medium leakage in the box on the battery. Further, the cooling and heating machine 520, the circulating pump 540, the radiator 530, and the control valves are also arranged in an integrated cabinet 1010 arranged outside the box 1000, thereby achieving modular mounting and management. The secondary heat exchange pipe 510 in the embodiment is a one-way circulating pipe, which exchanges heat with a plurality of battery packs 200 in the box 1000. The one-way circulating pipe may ensure that the secondary heat exchange pipe 510 has no leakage point in the box, and has good sealing performance during medium circulation, further avoiding the impact of medium leakage on the battery in the box.

Based on the above description, it can be seen that the temperature control apparatus including the cooling and heating machine, the radiator, the circulating pump, and the control valve assembly used in the embodiment has active heating and cooling functions, as well as a passive cooling function, and is suitable for use in an energy storage device using a large number of battery packs.

Of course, in addition to the temperature control apparatus provided in the embodiment, in some other embodiments, control of active cooling and heating for the battery pack may also be achieved solely through use of a cooling and heating machine and a circulating pump. However, such a manner may require the cooling and heating machine to always be in a working state, and result in significant energy consumption. In some embodiments, control of passive cooling for the battery pack may also be achieved solely through use of a radiator and a circulating pump. Such a manner consumes less energy, but may only provide cooling and has a limited cooling ability.

Heating of batteries is caused by various reasons. In addition to use of the aforementioned two-stage heat exchange and multi-mode temperature control apparatuses for cooling the battery pack from the outside, the embodiment also provides a solution to the problem of heating caused by poor uniformity of electrolytes in prismatic cells in the battery pack, i.e., a shared pipeline assembly is additionally arranged for each battery pack. Optionally, the shared pipeline assembly may also provide an explosion venting function for the battery pack. The shared pipeline assembly in the embodiment is described in detail below with reference to the accompanying drawings.

In the embodiment, electrolyte sharing is achieved using a shared pipeline assembly 400. The shared pipeline assembly 400 is not only arranged to achieve the function of electrolyte sharing, but may also be selectively arranged as an explosion venting pipeline for the battery pack. A principle-based structure of the shared pipeline assembly includes a shared pipeline and plurality of sealing mechanisms. Each prismatic cell 300 is communicated with the shared pipeline through an electrolyte injection channel of the prismatic cell. An explosion venting mechanism 415 used to connect a smoke treatment apparatus 900 is arranged at one end of the shared pipeline, and the other end of the shared pipeline is closed. The sealing mechanism is arranged at the electrolyte injection channel of the prismatic cell 300 and used to seal the prismatic cell 300. When the prismatic cell forms the battery pack, the sealing mechanism dissolves when encountering an electrolyte or forms an opening under an external force, to make the electrolyte injection channel be communicated and communicate the shared pipeline with an inner cavity of the prismatic cell. By means of the shared pipeline assembly, not only a plurality of prismatic cells are in the same electrolyte system and the difference caused by different electrolyte consumption is reduced, but also, when the battery pack is used for a certain number of years and the electrolyte is consumed, the electrolyte is extracted and replaced with a new electrolyte, or a new electrolyte is directly replenished, to prolong the service life of the battery pack. The shared pipeline may be a complete pipeline, but the preferred solution is that the shared pipeline is a pipeline formed by connection provided in the embodiment.

Implementations of the shared pipeline assembly are described below based on the structure of the prismatic cell 300.

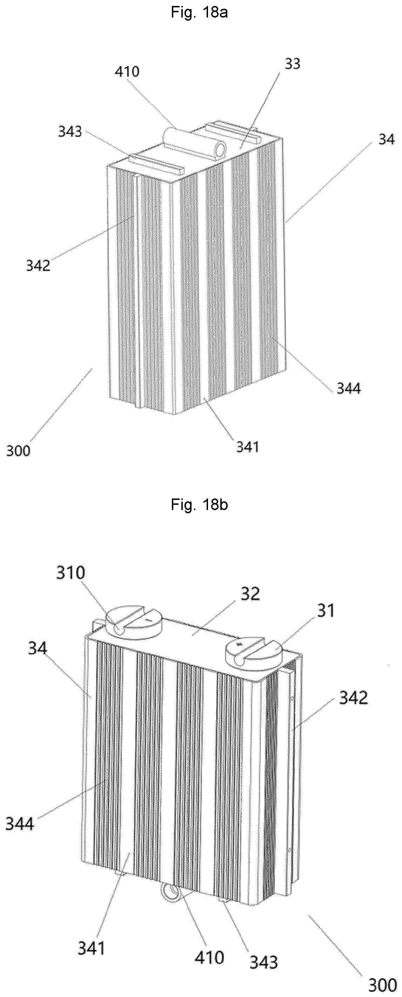

Fig. 18a and Fig. 18b are schematic structural diagrams of the prismatic cell 300 from different angles in the embodiment. A case of the prismatic cell 300 is formed by enclosing an upper cover plate 32, a lower cover plate 33, and a barrel 34. In the embodiment, the upper cover plate 32, the lower cover plate 33, and the barrel 34 are independently designed parts and are combined to form the case of the prismatic cell 300. In other embodiments, due to different processing techniques, a non-split structure may be used, In the embodiment, the lower cover plate 33 and the barrel 34 are integrated. Electrode terminals 31 are arranged on the upper cover plate 32, and the electrode terminals 31 include a positive electrode terminal 31a and a negative electrode terminal 31b. A collecting pipe 410 of the shared pipeline assembly 400 and a second assembly seat 343 are arranged on the lower cover plate 12.

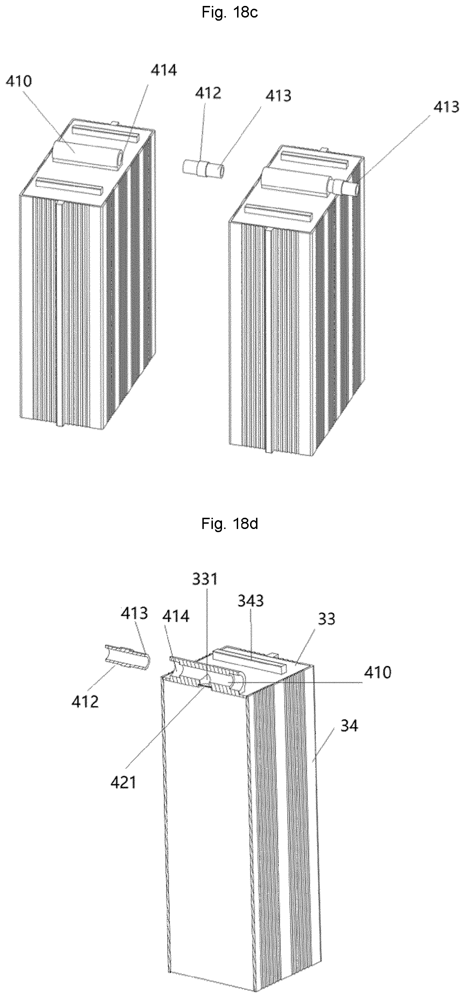

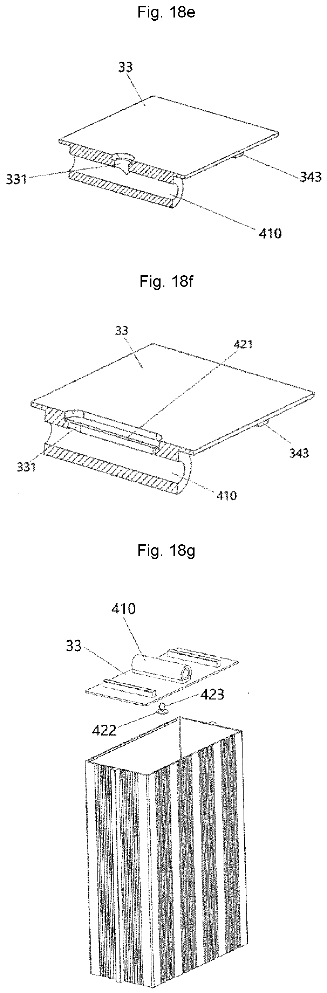

Fig. 18d is a schematic cross-sectional structural diagram of the prismatic cell 300 in the embodiment. An electrolyte injection channel is arranged on the lower cover plate 33. The electrolyte injection channel is a through hole 331. The collecting pipe 410 that covers the through hole 331 and extends along a width direction of the lower cover plate 33 is also arranged on the lower cover plate, and is communicates with the through hole 331. As shown in Fig. 18e and Fig. 18f, the through hole 331 may be a circular hole or a strip-shaped through hole.

In some embodiments, the collecting pipe 410 is arranged on the barrel of the prismatic cell and extends along a length or width direction of the lower cover plate. In other embodiments, the collecting pipe is arranged on the lower cover plate of the prismatic cell and extends along a length direction of the lower cover plate. To ensure sealing performance and reduce processing costs, in the embodiment, the collecting pipe 410 and the lower cover plate 33 are integrally formed by an extrusion process.

As shown in Fig. 18c, in some implementations, the electrolyte injection pipeline includes a plurality of collecting pipes 410 and a plurality of connecting pipes 412. The plurality of collecting pipes 410 are arranged on the lower cover plates 33 of the prismatic cells 300 respectively, and each collecting pipe is laid along the width direction of the lower cover plate 33 of the prismatic cell 300. The collecting pipes 410 on two adjacent prismatic cells 300 are connected by one connecting pipe 412. Due to the collecting pipe being integrated with the case of the prismatic cell 300 and connected by the connecting pipe, the case of the prismatic cell is simple and convenient to process, economical and practical, and has a good sealing effect.

In the embodiment, the collecting pipes 410 on two adjacent prismatic cells 300 are connected by one connecting pipe 412. The external dimensions of the connecting pipe 412 are equivalent to the external dimensions of the collecting pipe 410, thereby being favorable for improving the stability of connection between the collecting pipes 410. In some embodiments, the connecting pipe 412 includes two connecting nozzles 413, connecting ports 414 are formed at two ends of the collecting pipe 410, and the connecting nozzles 413 are embedded in the connecting ports 414 for sealed connection. Or, the connecting pipe 412 includes connecting ports 414, two ends of the collecting pipe 410 are provided with connecting nozzles 413, and the connecting nozzles 413 are embedded in the connecting ports 414 for sealed connection. The shape of the connecting nozzle 413 is a micro-conical shape, so that the connecting nozzle may be inserted into the connecting port 414 conveniently. In some embodiments, the connecting nozzle 413 is in interference fit with the connecting port 414, and the connecting nozzle 413 is riveted with the connecting port 414. During riveting, an epoxy adhesive or other adhesives may also be added to a riveted surface to further improve sealing and fixing effects. Or, the connecting nozzle 413 is in threaded connection with the connecting port 414.

In some implementations, as shown in Fig. 18d to Fig. 18h, a sealing mechanism is arranged on the electrolyte injection channel, and a first type of sealing mechanism is a sealing film 421.The sealing mechanism has two use cases: When a plurality of prismatic cells do not need to share the same electrolyte system, the sealing mechanism is used as an explosion venting film, and when a prismatic cell experiences thermal runaway, thermal runaway smoke enters an explosion venting channel formed by the collecting pipes 410 after bursting or melting the sealing mechanism.

When a plurality of prismatic cells need to share the same electrolyte system, the first type of sealing mechanism, i.e., the sealing film 421, may dissolve when encountering an electrolyte, and may keep an electrode assembly in the prismatic cell isolated from outside air before a shared electrolyte system is formed in the prismatic cell. A protective film is attached to one side of the sealing film 421 facing the inside of the case to prevent the electrolyte in the cell from dissolving the sealing film 421 in advance. When an electrolyte needs to be injected, the electrolyte enters the electrolyte injection and explosion venting channel formed by the collecting pipes 410, and after the sealing film 421 dissolves when encountering the electrolyte, the protective film attached thereto also falls off, so that the electrolyte may enter an inner cavity of the prismatic cell, thereby achieving the effect of electrolyte communication among the prismatic cells in the battery pack. Such a manner avoids use of other tools and has low requirements for an operating environment. As long as the electrolyte sharing channel is sealed in a timely manner after electrolyte injection, the electrolyte and the electrode assembly may be ensured not to be exposed to air.

A second type of sealing mechanism is a sealing sheet 422 with a traction ring 423. As shown in Fig. 18g and Fig. 18h, a sealing sheet 422 is arranged on the electrolyte injection channel, and a traction ring 423 is arranged on the sealing sheet 422. A traction wire is threaded through the traction ring 423 when the battery pack is assembled. Before electrolyte injection, the traction wires threaded through all the traction rings 423 are pulled to pull apart the sealing sheet 422 of each prismatic cell, so that all prismatic cells form openings for uniformly injecting the electrolyte into all the prismatic cells, thereby achieving the effect of electrolyte communication among the prismatic cells in the battery pack. The above operation is to be performed in an environment with a dew point standard of -25°C to -40°C, a temperature of 23±2°C, and a cleanliness level of 100,000.

When the sealing mechanism is opened due to dissolution or external force, the through hole 331 is opened, and the electrolyte injection channel is formed.

Compared to the shared pipeline assembly 400 formed by connection, an integrated shared pipeline assembly (i.e., a shared pipeline assembly using a complete pipeline) may also be used as an implementation to achieve the same electrolyte sharing function. However, the manner in which the integrated pipeline and a battery pack are fixed is limited by the process and cost of an existing sealing manner, and cannot achieve the advantages of low cost, simple process, and good sealing performance of the connected type shared pipeline assembly. Nevertheless, the integrated pipeline still falls within the scope of protection of the embodiment.

When the shared pipeline assembly 400 is used as an explosion venting channel, thermal runaway smoke emitted therefrom has a high temperature and contains flammable toxic and harmful gases. To improve the safety of the energy storage device and avoid safety accidents caused by thermal runaway smoke emitted from a battery pack, a smoke treatment apparatus may be mounted on the energy storage device to treat the thermal runaway smoke. A basic structure of the smoke treatment apparatus in the embodiment is described below. The smoke treatment apparatus may include at least one of an adsorption unit, a cooling unit, and an ignition unit. The specific structure and connection relationship of the adsorption unit, the cooling unit, and the ignition unit are described in detail in Embodiment 3.

### Embodiment 3

With rapid development of the energy storage industry, the safety of an energy storage power station has received widespread attention. Due to the possibility of thermal runaway caused by chemical reactions or external influences during charging and discharging of lithium-ion batteries, fire accidents of energy storage devices occur from time to time, which not only results in high maintenance costs, but also seriously affects the safety of the energy storage devices and causes serious social panic. Therefore, in the prior art, fire protection systems are often established to ensure the safety of the energy storage power stations. A traditional method of extinguishing fires with a fire extinguishing agent is typically used in the prior art. When fire protection apparatuses are distributed unevenly or have poor fire extinguishing effects, a battery that experiences thermal runaway may generate open flames and cause other surrounding batteries to catch fire, leading to uncontrollable fire and posing a serious safety hazard. Also, a fire protection system may be triggered to release a fire extinguishing agent to submerge all battery packs in the fire extinguishing agent, which results in damage of other normal batteries. Thus, the existing thermal runaway smoke treatment method has unsatisfactory effects, and the problem is to be solved.

As shown in Fig. 14 and Fig. 15a, to solve the problem of unsatisfactory thermal runaway smoke treatment effects, the embodiment provides an energy storage device. The energy storage device includes a box 1000, a fixing frame 1001, a smoke treatment apparatus 900, a battery management system (BMS), and at least two battery packs 200. The battery packs 200 may use the battery pack provided in Embodiment 1. The fixing frame 1001 is arranged in the box 1000. A plurality of fixing seats 1002 used to fix the battery packs 200 are arranged in the fixing frame 1001, and the at least two battery packs 200 are fixed to the fixing seats 1002 and connected sequentially in series. The box in Fig. 14 is not fully filled with the battery packs 200. In actual use, the number of the battery packs 200 is to be adjusted according to the needs of charging and discharging.

As shown in Fig. 16a to Fig. 16d, the battery pack 200 includes a fixing assembly 201, a shared pipeline assembly 400, and a plurality of prismatic cells 300. The fixing assembly fixedly connects the plurality of prismatic cells 300 as a whole, and the plurality of prismatic cells 300 are arranged in parallel. The shared pipeline assembly 400 is configured to communicate all inner cavities of the plurality of prismatic cells 300, so that all the prismatic cells 300 in the battery pack 200 are in one electrolyte system. The shared pipeline assembly 400 may also be used as an explosion venting channel of the battery pack 200, and thermal runaway smoke discharged through the shared pipeline assembly is treated by the smoke treatment apparatus 900.

In the embodiment, the smoke treatment apparatus 900 is connected to the shared pipeline assembly on each battery pack 200, so that when any prismatic cell 300 experiences thermal runaway, thermal runaway smoke is discharged through the shared pipeline assembly 400 to the smoke treatment apparatus 900 for treatment. The smoke treatment apparatus 900 is mounted in the box 1000. However, to facilitate mounting and maintenance and improve operation safety, as shown in Fig. 15b, an independent integrated cabinet 1010 is designed for the box 1000 to place the smoke treatment apparatus 900, and optionally a cabinet door 1011 is designed for the integrated cabinet. To facilitate operation, a BMS host and other apparatuses may also be placed in the integrated cabinet. The BMS is configured to manage the at least two battery packs 200, and includes the BMS host and BMS slaves 601 of which the number is the same as that of the battery packs 200. The BMS host may be arranged in the integrated cabinet 1010 or in a position far from the energy storage device. The BMS slaves 601 correspond to the battery packs 200 one by one. As shown in Fig. 16c, the BMS slaves 601 are fixed to the battery packs 200 via slave mounting seats 602, to collect parameters of the battery packs 200 and upload the parameters to the BMS host. The BMS host communicates with all the BMS slaves respectively to send control instructions to the BMS slaves.

In the embodiment, as the energy source of the energy storage device uses the plurality of battery packs 200, and one battery pack 200 includes the plurality of prismatic cells 300, the series structure between the battery packs 200 and the parallel connection manner of all the prismatic cells 300 in the battery packs 200 are the key to normal operation of the energy storage device. In the embodiment, the battery packs 200 are connected in series by two electrical connectors, and the electrical connectors may also achieve parallel connection of all the prismatic cells 300 in the battery packs 200, thereby simplifying the circuit connection structure of the battery packs 200. As shown in Fig. 16a and Fig. 16c, each battery pack is provided with two electrical connectors 700. The specific structure and connection relationship of the electrical connectors 700 are described in detail in Embodiment 2, and descriptions thereof are omitted herein.

In the embodiment, the shared pipeline assembly 400 is configured to achieve electrolyte sharing among the prismatic cells 300 in the battery pack 200, and achieve a safe explosion venting function of the battery pack 200. The basic principle is to communicate inner cavities of the prismatic cells 300 in the battery pack 200, so that all the prismatic cells 300 are in the same electrolyte system, thereby improving uniformity of electrolytes in the prismatic cells 300, and reducing difference generated by different electrolyte consumptions. Also, when the battery pack 200 is used for a certain number of years and the electrolyte is consumed, the electrolyte is extracted and replaced with a new electrolyte, or a new electrolyte or a lithium additive is directly replenished, to prolong the service life of the battery pack 200. The shared pipeline assembly 400 may be a complete pipeline, or a pipeline formed by connection provided in the embodiment. As shown in Fig. 16a, the shared pipeline assembly 400 includes a plurality of collecting pipes 410 and a plurality of connecting pipes 412. The plurality of collecting pipes 410 are arranged on the cases of the prismatic cells 300 respectively, and each collecting pipe 410 is laid along the thickness or width direction of the case of the prismatic cell 300. The collecting pipes 410 on two adjacent prismatic cells 300 are connected by one connecting pipe 412.

To make the shared pipeline assembly 400 achieve an explosion venting function simultaneously, an electrolyte injection channel communicated with the collecting pipe 410 arranged on the prismatic cell is formed in the prismatic cell 300, so that the electrolyte injection channel also has the function of an explosion venting hole. The shared pipeline assembly 400 not only may achieve electrolyte sharing, but also may be used as a uniform explosion venting channel of the battery pack. One end of the shared pipeline assembly 400 may be closed, or provided with an electrolyte injection mechanism. An explosion venting mechanism 415 is arranged at the other end of the shared pipeline assembly 400 and connected with the smoke treatment apparatus for treatment of thermal runaway smoke.

Of course, the shared pipeline assembly 400 may also have only a single operation, i.e., an electrolyte sharing function. Then the electrolyte injection mechanism is mounted at one end of the shared pipeline assembly 400, and the other end only provides the explosion venting function. Moreover, one end of the shared pipeline assembly 400 is closed, and the explosion venting mechanism 415 connected with the smoke treatment apparatus is mounted at the other end.

The specific description of implementation of the shared pipeline assembly based on the structure of the prismatic cell 300 is provided in Embodiment 2 and shown in Fig. 18a to Fig. 18h, and descriptions thereof are omitted herein. It should be noted that before the prismatic cells 300 form the battery pack 200, the inner cavities of the prismatic cells 300 need to be sealed, but the inner cavities of the prismatic cells 300 need to be communicated when forming the battery pack 200, which is a condition for forming electrolyte sharing. Thus, a sealing mechanism that meets the requirements needs to be designed on the prismatic cell 300. Specific arrangement of the sealing mechanism is described in detail in Embodiment 2, and descriptions thereof are omitted herein.

When the shared pipeline assembly 400 is used as an explosion venting channel, thermal runaway smoke emitted therefrom has a high temperature and contains flammable toxic and harmful gases. To improve the safety of the energy storage device and avoid safety accidents caused by thermal runaway smoke emitted from the battery pack 200, the smoke treatment apparatus may be mounted on the energy storage device to treat the thermal runaway smoke. A basic structure of the smoke treatment apparatus in the embodiment is described below.

In some embodiments, the smoke treatment apparatus 900 may be an ignition unit 940 arranged outside the box 1000 and used to ignite thermal runaway smoke; or, the smoke treatment apparatus is an adsorption unit arranged in or outside the box 1000 and used to adsorb the thermal runaway smoke; or, the smoke treatment apparatus is a cooling unit arranged in or outside the box 1000 and used to cool the thermal runaway smoke.

In some embodiments, the smoke treatment apparatus includes a cooling unit and an adsorption unit. The cooling unit and the adsorption unit are arranged in or outside the box 1000. When arranged outside the box 1000, the adsorption unit and the cooling unit may be arranged in the integrated cabinet 1010, as shown in Fig. 14. A smoke inlet of the cooling unit is communicated with the shared pipeline assembly 400 on each battery pack 200 through a pressure relief main pipe, and a smoke outlet of the cooling unit is communicated with the adsorption unit.

In some embodiments, the smoke treatment apparatus includes the cooling unit arranged in or outside the box 1000 (when arranged outside the box, the cooling unit may be arranged in the integrated cabinet 1010) and the ignition unit 940 arranged outside the box 1000. A smoke inlet of the cooling unit is communicated with a shared pipeline assembly 400 on each battery pack 200 through a pressure relief main pipe, and a smoke outlet of the cooling unit is connected to the ignition unit 940.

In some embodiments, the smoke treatment apparatus includes the adsorption unit arranged in or outside the box 1000 and the ignition unit 940 arranged outside the box 1000. When arranged outside the box 1000, the adsorption unit may be arranged in the integrated cabinet 1010. A smoke inlet of the adsorption unit is communicated with the shared pipeline assembly 400 on each battery pack through a pressure relief main pipe, and a smoke outlet of the adsorption unit is connected to the ignition unit 940.

In the embodiment, the smoke treatment apparatus includes the cooling unit, the adsorption unit, and the ignition unit. The cooling unit and the adsorption unit are arranged in or outside the box 1000, and when arranged outside the box 1000, the adsorption unit and the cooling unit may be arranged in the integrated cabinet 1010. The ignition unit 940 is arranged outside the box1000. A smoke inlet of the cooling unit is communicated with the shared pipeline assembly 400 on each battery pack 200 through a pressure relief main pipe, a smoke outlet of the cooling unit is connected to a smoke inlet of the adsorption unit, and a smoke outlet of the adsorption unit is connected to the ignition unit 940.

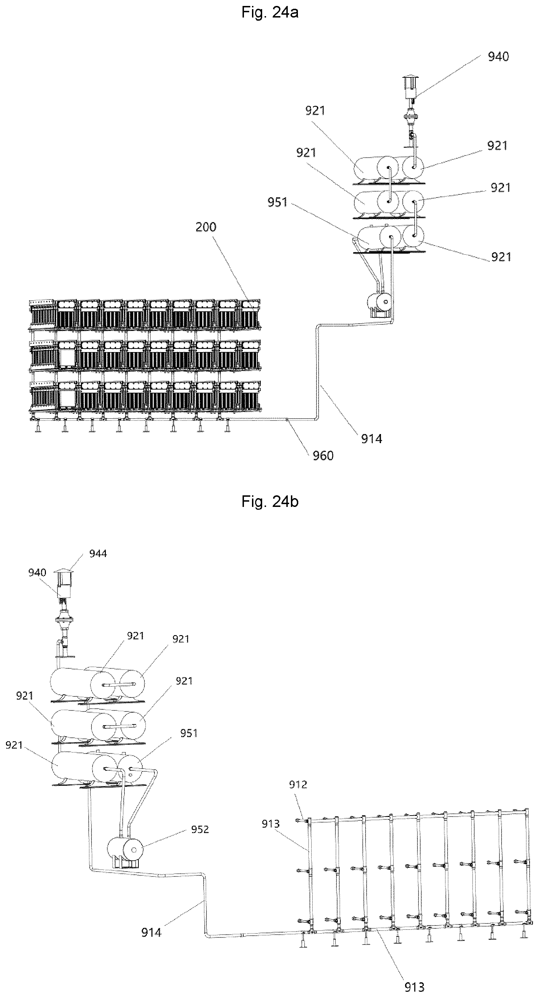

With reference to Fig. 24a to Fig. 24d, the specific structures and connection relationships of the adsorption unit, the cooling unit, and the ignition unit 940 are described in detail below.

Fig. 24a and Fig. 24b are schematic structural diagrams of the smoke treatment apparatus 900 in the embodiment. The smoke treatment apparatus 900 includes a smoke exhaust pipe connected to each battery pack 200, the cooling unit and adsorption unit arranged in the integrated cabinet 1010, and the ignition unit 940 arranged outside the box 1000.

The smoke exhaust pipe includes a plurality of primary pressure relief pipes 912 and secondary pressure relief pipes 913. The number of the primary pressure relief pipes 912 is the same as the number of the battery packs 200. One end of the primary pressure relief pipe 912 is connected to the explosion venting mechanism 415 of the battery packs 200 one by one, and the other end of the primary pressure relief pipe 912 is connected to the secondary pressure relief pipe 913. The number of the secondary pressure relief pipes 913 is changed with the number of layers of the fixing frame 1001, and may also be set according to actual needs. In the embodiment, sixty battery packs 200 are arranged in the box 1000, six layers are arranged in the fixing frame 1001 of the box 1000, and ten battery packs 200 are placed in each layer of the fixing frame 1001. Six secondary pressure relief pipes 913 are arranged according to the number of layers. Ten primary pressure relief pipes 912 connected to the explosion venting mechanism 415 of the battery packs 200 in each layer are all connected to one secondary pressure relief pipe 913 arranged in the same layer. The six secondary pressure relief pipes 913 are collected into the pressure relief main pipe 914. The diameter of the pressure relief main pipe 914 is set to be slightly larger than that of each secondary pressure relief pipe 913. The pressure relief main pipe 914 is connected to the smoke treatment units. Or, a secondary pressure relief pipe 913 is arranged between the battery packs 200 in each column, and then a plurality of secondary pressure relief pipes 913 are collected into the pressure relief main pipe 914. Or, the primary pressure relief pipes 912 of the sixty prismatic cells 300 are all connected to one secondary pressure relief pipe 913, and the secondary pressure relief pipe 913 is connected to the smoke treatment units.

The adsorption unit includes N adsorption tanks 921 connected sequentially in series, and N is an integer greater than or equal to 1. When the smoke treatment apparatus is not provided with the cooling unit, an inlet of a first adsorption tank 921 is communicated with the pressure relief main pipe 914 or the secondary pressure relief pipe 913. Each adsorption tank 921 is filled with an adsorption medium for adsorbing thermal runaway smoke. After toxic and harmful substances are adsorbed, the Nth adsorption tank 921 is provided with a pipeline for leading out thermal runaway smoke out of the box 1000, to discharge residual gas out of the box 1000, or connect the pipeline to the ignition unit 940 to ignite the residual gas. The N adsorption tanks 921 are connected in series by hoses, so that the adsorption tanks may be freely arranged according to the design of different boxes 1000. The arrangement of the plurality of adsorption tanks 921 may prolong the process of filtering and adsorbing thermal runaway smoke, which helps to more thoroughly adsorb the thermal runaway smoke. To improve the pressure resistance of a tank body, the adsorption tank 921 may be made of a circular barrel body. Two ends of the circular barrel body may be sealed with circular end caps. The circular end caps may be connected to the circular barrel body via flanges or welded to the two ends of the circular barrel body. A smoke inlet of the adsorption tank is arranged at the top of adsorption tank 921, and a smoke outlet is arranged at the bottom of the adsorption tank 921.

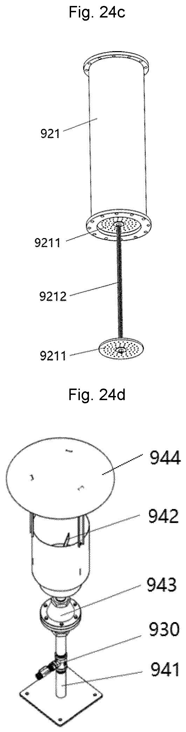

As shown in Fig. 24c, which is a schematic structural diagram of the adsorption tank 921 in the embodiment, two perforated plates 9211 are arranged in the adsorption tank 921. The two perforated plates 9211 are axially connected by a connecting rod 9212 having threads at both ends, i.e., the two ends of the connecting rod 9212 pass through the two perforated plates 9211 respectively and are fixed by nuts. The two adjacent perforated plates 9211 and the inner wall of the adsorption tank 921 form an adsorption chamber, and the adsorption chamber is the with an adsorption medium. The adsorption medium is activated carbon, zeolite molecular sieve, alumina, or the like, which has good adsorption performance and low cost.

As shown in Fig. 24d, when the smoke treatment apparatus is provided with the ignition unit 940, a trigger unit 930 is synchronously arranged and used to trigger and start the ignition unit 940. The ignition unit 940 is arranged outside the box 1000. When the smoke treatment apparatus is not provided with the cooling unit and the adsorption unit, the pressure relief main pipe 914 is directly connected to the ignition unit. When the smoke treatment apparatus is provided with the adsorption unit, the ignition unit is connected to the outlet of the Nth adsorption tank 921. The thermal runaway smoke is discharged out of the box 1000 through the N adsorption tanks 921 and ignited by the ignition unit 940 for harmless treatment, thereby reducing environmental pollution. When the smoke treatment apparatus is provided with the cooling unit and the adsorption unit, the connection manner of the ignition unit is the same as the connection manner when only the adsorption unit is arranged. When the smoke treatment apparatus is provided with the cooling unit but not the adsorption unit, the ignition unit 940 is connected to the outlet of the cooling unit.

The trigger unit 930 may be different forms of sensors, and may be arranged in the secondary pressure relief pipe 913 or the pressure relief main pipe 914 according to different needs. When the prismatic cell 300 experiences thermal runaway, parameters including temperature, pressure, or gas volume fraction are detected in real time. When the parameters exceed a set threshold, a signal is emitted, and the signal may be an electrical signal, a mechanical signal or the like. The sensor may be at least one of a pressure sensor, a gas sensor, and a temperature sensor. The pressure sensor, the gas sensor, and the temperature sensor may be arranged in the secondary pressure relief pipe 913 or on the pressure relief main pipe 914 or cell case. The pressure sensor may be a magnetic switch, or the like.

To ensure the combustion effect of the thermal runaway smoke, different numbers of ignition units 940 may be arranged to prevent inability to ignite the thermal runaway smoke when an ignition unit 940 fails or malfunctions. As shown in Fig. 24d, the ignition unit 940 includes a gas exhaust pipe 941 and an igniter fixed to the top end of the gas exhaust pipe 941. An inlet of the gas exhaust pipe 941 is communicated with an outlet of the adsorption unit. The igniter 942 is arranged at an outlet end of the gas exhaust pipe 941 and used to ignite thermal runaway smoke discharged from the gas exhaust pipe 941. A fire arrestor 943 may also be arranged on the gas exhaust pipe 941 and used to prevent downward transmission of flames. The fire arrestor may be a one-way valve, a pipeline fire arrestor, or the like. A compacted filter screen is arranged in the pipeline fire arrestor. In addition, a rainproof cover 944 may also be arranged at the top of the smoke exhaust pipe 941 to prevent external impurities or moisture from entering and blocking the gas exhaust pipe 941. The igniter 942 may use an existing arc igniter, a resistance wire igniter, or the like. The arc igniter may use a pulse igniter, and the power supply of the igniter may use a dry battery or AC power according to an on-site environment. When any prismatic cell 300 experiences thermal runaway, thermal runaway smoke reaches the smoke exhaust pipe 941. When detecting the thermal runaway smoke in the gas exhaust pipe 941, the trigger unit 930 feeds back a signal to the igniter 942, and the igniter 942 starts and ignites the residual thermal runaway smoke.

Before the thermal runaway smoke passes through the adsorption unit, the cooling unit is arranged to cool the high-temperature thermal runaway smoke, to prevent the high-temperature smoke from damaging the adsorption unit, or during ignition in the ignition unit 940, to prevent residual electrolyte from causing excessive flames and damaging some components of the ignition unit 940 when the adsorption is insufficient. The cooling unit includes M cooling tanks 951 and at least one reflux tank 952. The M cooling tanks 951 and the reflux tank 952 are connected by hoses and arranged according to the design requirements of the box. However, an electrolyte inlet of the reflux tank 952 is to be lower than an electrolyte outlet of the cooling tank 951. The first cooling tank 951 is connected to the pressure relief main pipe 914 or the secondary pressure relief pipe 913. When a plurality of cooling tanks 951 and reflux tanks 952 are arranged, the cooling tanks and reflux tanks may be arranged alternately. The Mth cooling tank 951 or the last reflux tank 952 is connected to the first adsorption tank 921. When the thermal runaway smoke enters the cooling tank 951, some solid particles and vaporized electrolyte are condensed. A gas-liquid mixture enters the reflux tank 952, and the liquid substance remains in the reflux tank 952. The gaseous substance continues to enter the adsorption tank 921, and the residual liquid and combustible gas are adsorbed by the adsorption medium in the adsorption tank 921. The gas that is not adsorbed continues to enter the gas exhaust pipe and is eventually ignited. The reflux tank 952 may use a tank body of any shape or a flexible bag structure that does not react with the electrolyte, as long as the return tank may collect small droplets of electrolyte from the thermal runaway smoke. The cooling unit and the adsorption unit may be changed in the connection sequence, but direct passage of high-temperature gas through the adsorption unit is not conducive to adsorption and may cause certain damage to the adsorption unit. Therefore, the preferred treatment is cooling first and then adsorption to improve the safety of smoke treatment.

The cooling tank 951 and the adsorption tank 921 may be partially or completely filled with the cooling medium and the adsorption medium to meet different usage requirements. The cooling medium may be one of ceramic balls, honeycomb ceramic bodies, silicon dioxide, aluminum oxide, zirconium oxide, and titanium oxide. The embodiment uses a physical cooling method to cool the thermal runaway smoke. Such materials have good cooling effects, stable properties, do not produce gas, and are conducive to reducing subsequent gas adsorption pressure.

In some embodiments, as shown in Fig. 24a, the smoke treatment apparatus further includes a sensing unit 960. The sensing unit 960 may send a signal to the BMS in case of thermal runaway, and the BMS controls the battery pack 200 in the box 1000 to stop charging or discharging, to improve the safety of the entire system. The sensing unit 960 may be one of a pressure sensor, a gas sensor, or a temperature sensor. Fig. 24a only illustrates one of mounting positions of the sensing unit 960, and a plurality of sensing units may be arranged for timely detection and sensing.

In some embodiments, a pressure valve (not shown in the drawings) is arranged at the outlet of the Nth adsorption tank 921 to improve a pressure holding effect. When the pressure valve is closed, the thermal runaway smoke in the cooling unit and the adsorption unit is hold the pressure to increase the adsorption and cooling effects. When the pressure of the thermal runaway smoke exceeds a threshold set for the pressure valve, the pressure valve is opened, the thermal runaway smoke enters the ignition unit 940 and is ignited by the ignition unit 940.

In some embodiments, the cooling tank 951 in the smoke treatment apparatus may be a liquid cooling tank, and share a cooling medium with the temperature control apparatus 500. Once the battery pack 200 is detected to experience thermal runaway, the temperature control apparatus 500 supplies the refrigerated cooling medium to the liquid cooling tank 951 to cool thermal runaway smoke.

Among the causes of thermal runaway in batteries, battery heating is a very important factor, so solving the problem of battery heating is crucial. The aforementioned electrolyte sharing solution may solve the problem of heating caused by poor uniformity of electrolytes in the battery, and a solution to the problem of heating from outside the battery is also provided in the embodiment. Therefore, to further improve the safety of the energy storage device, it is necessary to provide the temperature control apparatus. The heat exchange assembly and the temperature control apparatus are described in detail in Embodiment 2, and descriptions thereof are omitted herein.

## Claims

1. A battery pack, comprising a fixing assembly, a shared pipeline assembly, a heat exchange assembly, and a prismatic cell, wherein a plurality of prismatic cells are provided, the plurality of prismatic cells are connected in parallel;
the fixing assembly is configured to fixedly connect the plurality of prismatic cells side by side to form the battery pack;
the shared pipeline assembly is configured to communicate all inner cavities of the plurality of prismatic cells, so that all the prismatic cells of the plurality of prismatic cells in the battery pack are in one electrolyte system; and
the heat exchange assembly is configured to be fixedly connected to electrode terminals on the same sides of the plurality of prismatic cells, to achieve heat exchange between all the prismatic cells of the plurality of prismatic cells in the battery pack and the outside.

2. The battery pack as claimed in claim 1, wherein the shared pipeline assembly comprises an electrolyte injection pipeline, and the prismatic cell comprises an electrolyte injection channel, the electrolyte injection channel is provided with a sealing mechanism, each prismatic cell of the plurality of prismatic cells is communicated with the electrolyte injection pipeline through the electrolyte injection channel, one end of the electrolyte injection pipeline is used as a main electrolyte injection port, the other end of the electrolyte injection pipeline is closed, the sealing mechanism is configured to seal the electrolyte injection channel, and the sealing mechanism dissolving in response to encountering an electrolyte or forming an opening under an external force, to make the electrolyte injection channel be communicated and communicate the electrolyte injection pipeline with an electrolyte cavity of the prismatic cell.

3. The battery pack as claimed in claim 2, wherein the electrolyte injection pipeline comprises a collecting pipe and a connecting pipe, wherein a plurality of collecting pipes and a plurality of connecting pipes are provided, the prismatic cell comprises a prismatic cell case, wherein a plurality of prismatic cell cases are provided, the plurality of collecting pipes are arranged on the plurality of prismatic cell cases respectively, each collecting pipe of the plurality of collecting pipes is laid along the thickness or width direction of the prismatic cell case, and the collecting pipes on two adjacent prismatic cells being connected by one connecting pipe.

4. The battery pack as claimed in claim 3, wherein a connecting nozzle is arranged at an end of the connecting pipe, two ends of the connecting pipe are provided the connecting nozzles, and a connecting port is formed at an end of the collecting pipe, the connecting ports are formed at two ends of the collecting pipe, the connecting nozzles are embedded in the connecting ports for sealed connection; or, two ends of the connecting pipe comprise connecting ports, and connecting nozzles are formed at two ends of the collecting pipe, the connecting nozzles are embedded in the connecting ports for sealed connection.

5. The battery pack as claimed in claim 4, wherein the connecting nozzle is a conical nozzle, and the connecting nozzle is in interference fit with the connecting port; or, the connecting nozzle is in threaded connection with the connecting port.

6. The battery pack as claimed in any one of claims 2 to 5, wherein the main electrolyte injection port of the electrolyte injection pipeline is provided with a detachable explosion venting mechanism, and a closed end of the electrolyte injection pipeline is sealed with a blocking member.

7. The battery pack as claimed in claim 2, wherein the sealing mechanism is a sealing sheet provided with a traction ring, the traction ring pulls apart the sealing sheet under the traction of an external force to form an opening; or, the sealing mechanism is a sealing film to which a protective film is attached, the sealing film is soluble in an electrolyte, the protective film is insoluble in the electrolyte, the protective film is attached to one side of the sealing film facing the inner cavity of the prismatic cell, and after the sealing film dissolves in the electrolyte, the protective film falling off.

8. The battery pack as claimed in claim 1, wherein the heat exchange assembly comprises a heat transfer pipe, and a slot is formed in the electrode terminal, the heat transfer pipe is fixed in the slot.

9. The battery pack as claimed in claim 8, wherein a cross section of the slot is C-shaped or U-shaped; a ratio of the diameter of the heat transfer pipe to a width of the widest part of the slot is (1:1.05) to (1:1.1); and a ratio of a length of the slot to a width of an upper cover plate of the prismatic cell is (0.7:1) to (0.9:1).

10. The battery pack as claimed in claim 3, wherein the prismatic cell case comprises an upper cover plate, a lower cover plate, and a barrel, the electrode terminal is arranged on the upper cover plate in an insulated manner, the lower cover plate and the collecting pipe are integrally formed aluminum extrusion parts, the barrel is an aluminum extrusion part, and the lower cover plate is fixed to the barrel by laser welding.

11. The battery pack as claimed in claim 1, wherein the fixing assembly is a fixing case, the plurality of prismatic cells are fixedly arranged side by side in the fixing case; or, the fixing assembly comprises a first assembly member and a second assembly member, the first assembly member is fixedly connected to a side wall of a barrel of the prismatic cell and is configured to fix the plurality of prismatic cells arranged side by side as a whole, and the second assembly member is positioned below the plurality of prismatic cells arranged side by side and is fixedly connected to the lower cover plate of the prismatic cell.

12. An energy storage device, comprising a box, a fixing frame, a temperature control apparatus, a battery management system (BMS), and a battery pack, wherein at least two battery packs are provided,
the fixing frame is arranged in the box, and the at least two battery packs are connected in series and fixed onto the fixing frame;
the battery pack comprises a fixing assembly, a shared pipeline assembly, a heat exchange assembly, and a plurality of prismatic cells,
the fixing assembly fixedly connects the plurality of prismatic cells as a whole, and the plurality of prismatic cells are arranged in parallel;
the shared pipeline assembly is configured to communicate all inner cavities of the plurality of prismatic cells, so that all prismatic cells of the plurality of prismatic cells in the battery pack are in one electrolyte system;
the heat exchange assembly is configured to achieve heat exchange between the battery pack and the temperature control apparatus;
the temperature control apparatus is arranged outside the box and configured to heat or cool each battery pack via the heat exchange assembly; and
the BMS is configured to manage the at least two battery packs, and comprises a BMS host and a BMS slave, wherein a plurality of BMS slaves are provided, the plurality of BMS slaves of which the number is the same as that of the at least two battery packs, the plurality of BMS slaves are arranged on the at least two battery packs respectively, and the BMS host is in communication with all the plurality of BMS slaves.

13. The energy storage device as claimed in claim 12, wherein the battery pack is also provided with an electrical connector, wherein two electrical connectors are provided, one electrical connector is electrically connected to all positive electrode terminals of the plurality of prismatic cells on the battery pack, the other electrical connector is connected to all negative electrode terminals of the plurality of prismatic cells on the battery pack, and the electrical connector connected to the positive electrode terminals on one battery pack is connected to the electrical connector connected to the negative electrode terminals on the adjacent another battery pack, to connect the two adjacent battery packs in series.

14. The energy storage device as claimed in claim 13, wherein the electrical connector comprises a first connecting portion and a second connecting portion, the first connecting portion is electrically connected to all positive or negative electrode terminals on one battery pack, and the second connecting portion is electrically connected to the second connecting portion of the electrical connector on the adjacent another battery pack, to connect the two adjacent battery packs in series.

15. The energy storage device as claimed in claim 14, wherein the electrical connector comprises a buffer groove, the buffer groove is formed on one side of the first connecting portion near the second connecting portion.

16. The energy storage device as claimed in claim 12, wherein the heat exchange assembly comprises a primary heat exchange pipe, one portion of the primary heat exchange pipe is connected to all positive or negative electrode terminals on the battery pack, the other portion is connected to the temperature control apparatus, and the primary heat exchange pipe is kept insulated from the temperature control apparatus.

17. The energy storage device as claimed in claim 12, wherein the heat exchange assembly comprises a primary heat exchange pipe, a secondary heat exchange pipe, and an insulation heat exchange member, one portion of the primary heat exchange pipe is connected to all positive or negative electrode terminals on the battery pack, the other portion of the primary heat exchange pipe perform insulation heat exchange with one portion of the secondary heat exchange pipe via the insulation heat exchange member, and the other portion of the secondary heat exchange pipe is connected to the temperature control apparatus.

18. The energy storage device as claimed in claim 17, wherein the insulation heat exchange member is provided with a first mounting portion and a second mounting portion, wherein at least one first mounting portion and at least one second mounting portion are provided, the first mounting portion is configured to mount the other portion of the primary heat exchange pipe, the second mounting portion is configured to mount one portion of the secondary heat exchange pipe, and the primary heat exchange pipe is kept insulated from the first mounting portion, or, the secondary heat exchange pipe is kept insulated from the second mounting portion, or the first mounting portion is kept insulated from the second mounting portion.

19. The energy storage device as claimed in claim 18, wherein the first mounting portion and the second mounting portion are holes or slots.

20. The energy storage device as claimed in any one of claims 16 to 19, wherein a slot is formed in all the positive or negative electrode terminals on the battery pack, a portion of the primary heat exchange pipe is fixed in the slot to achieve heat exchange of the battery pack.

21. The energy storage device as claimed in claim 16, wherein the primary heat exchange pipe is a heat pipe, and a thermo electric cooler (TEC) is arranged as the temperature control apparatus.

22. The energy storage device as claimed in claim 17, wherein the primary heat exchange pipe is a heat pipe, the secondary heat exchange pipe is a liquid cooling pipe, and the temperature control apparatus comprises a cooling and heating machine, a radiator, a circulating pump, and a control valve assembly, the cooling and heating machine is configured to actively heat or cool a medium in the secondary heat exchange pipe, a liquid inlet of the cooling and heating machine is connected to an outlet of the secondary heat exchange pipe through a first pipeline, and a liquid outlet of the cooling and heating machine is connected to an inlet of the secondary heat exchange pipe through a second pipeline; the radiator is connected to the first pipeline or the second pipeline and configured to passively cool the medium in the secondary heat exchange pipe; the circulating pump is arranged on the first pipeline or the second pipeline and configured to provide power for the medium in the secondary heat exchange pipe to flow; and the control valve assembly is arranged on the first pipeline or the second pipeline and configured to control the cooling and heating machine to be communicated with the radiator to achieve passive cooling of the medium; or, the control valve assembly controlling the cooling and heating machine to be disconnected from the radiator, and the medium flows into the cooling and heating machine to achieve active heating or active cool.

23. The energy storage device as claimed in claim 22, wherein the control valve assembly comprises a three-way electric valve, a first port of the three-way electric valve is communicated with the liquid inlet of the cooling and heating machine, a second port of the three-way electric valve is communicated with the first pipeline, and a third port of the three-way electric valve is communicated with an outlet of the radiator.

24. The energy storage device as claimed in claim 22, wherein the control valve assembly comprises a first electric valve and a second electric valve, the first electric valve is arranged at the outlet of the radiator, and the second electric valve is arranged on the first pipeline; or the first electric valve is arranged at an inlet of the radiator, and the second electric valve is arranged on the second pipeline.

25. The energy storage device as claimed in claim 24, wherein the temperature control apparatus further comprises an electrical control box, the electrical control box is connected to the cooling and heating machine, the circulating pump, and the control valve assembly respectively, and configured to control the working state of the cooling and heating machine, the circulating pump, and the control valve assembly; and the electrical control box is in communication with the BMS.

26. An energy storage device, comprising a box, a fixing frame, a smoke treatment apparatus, a battery management system (BMS), and a battery pack, wherein at least two battery packs are provided,
the fixing frame is arranged in the box, and the at least two battery packs are connected in series and fixed onto the fixing frame;
the battery pack comprises a fixing assembly, a shared pipeline assembly, and a plurality of prismatic cells;
the fixing assembly fixedly connects the plurality of prismatic cells as a whole, and the plurality of prismatic cells are arranged in parallel;
the shared pipeline assembly is configured to communicate all inner cavities of the plurality of prismatic cells, so that all prismatic cells of the plurality of prismatic cells in the battery pack are in one electrolyte system;
the smoke treatment apparatus is connected to the shared pipeline assembly on each battery pack of the at least two battery packs, so that in response to any prismatic cell of the plurality of prismatic cells experiences thermal runaway, thermal runaway smoke is discharged through the shared pipeline assembly to the smoke treatment apparatus for treatment; and
the BMS is configured to manage the at least two battery packs, and comprises a BMS host and a BMS slave, wherein a plurality of BMS slaves are provided, the plurality of BMS slaves of which the number is the same as that of the at least two battery packs, the plurality of BMS slaves are arranged on the at least two battery packs respectively, and the BMS host is in communication with all the plurality of BMS slaves.

27. The energy storage device as claimed in claim 26, wherein the battery pack is also provided with an electrical connector, wherein two electrical connectors are provided, one electrical connector is electrically connected to all positive electrode terminals of the plurality of prismatic cells on the battery pack, the other electrical connector is connected to all negative electrode terminals of the plurality of prismatic cells on the battery pack, and the electrical connector connected to the positive electrode terminals on one battery pack is connected to the electrical connector connected to the negative electrode terminals on the adjacent another battery pack, to connect the two adjacent battery packs in series.

28. The energy storage device as claimed in claim 27, wherein the electrical connector comprises a first connecting portion and a second connecting portion, the first connecting portion is electrically connected to all positive or negative electrode terminals on one battery pack, and the second connecting portion is electrically connected to the second connecting portion of the electrical connector on the adjacent another battery pack, to connect the two adjacent battery packs in series.

29. The energy storage device as claimed in claim 28, wherein the electrical connector comprises a buffer groove, the buffer groove is formed on one side of the first connecting portion near the second connecting portion.

30. The energy storage device as claimed in any one of claims 26 to 29, wherein the shared pipeline assembly comprises an electrolyte injection pipeline, each prismatic cell of the plurality of prismatic cells is communicated with the electrolyte injection pipeline via a channel of the each prismatic cell, an electrolyte injection mechanism is mounted at one end of the electrolyte injection pipeline, and an explosion venting mechanism connected to the smoke treatment apparatus is mounted at the other end; or, the explosion venting mechanism connected to the smoke treatment apparatus is mounted at one end of the electrolyte injection pipeline, and the other end is closed.

31. The energy storage device as claimed in claim 30, wherein the electrolyte injection pipeline comprises a collecting pipe and a connecting pipe, wherein a plurality of collecting pipes and a plurality of connecting pipes are provided, the prismatic cell comprises a prismatic cell case, wherein a plurality of prismatic cell cases are provided, the plurality of collecting pipes are arranged on the plurality of prismatic cell cases respectively, each collecting pipe of the plurality of collecting pipes is laid along the thickness or width direction of the prismatic cell case, and the collecting pipes on two adjacent prismatic cells being connected by one connecting pipe.

32. The energy storage device as claimed in claim 26, wherein the smoke treatment apparatus is an ignition unit arranged outside the box and configured to ignite the thermal runaway smoke; or, the smoke treatment apparatus is an adsorption unit arranged in or outside the box and configured to adsorb the thermal runaway smoke; or, the smoke treatment apparatus is a cooling unit arranged in or outside the box and configured to cool the thermal runaway smoke.

33. The energy storage device as claimed in claim 26, wherein the smoke treatment apparatus comprises a cooling unit and an adsorption unit, the cooling unit and the adsorption unit are arranged in or outside the box, a smoke inlet of the cooling unit is communicated with the shared pipeline assembly on each battery pack of the at least two battery packs through a smoke channel, and a smoke outlet of the cooling unit is communicated with the adsorption unit.

34. The energy storage device as claimed in claim 26, wherein the smoke treatment apparatus comprises a cooling unit arranged in or outside the box, and an ignition unit arranged outside the box, a smoke inlet of the cooling unit is communicated with the shared pipeline assembly on each battery pack of the at least two battery packs through a smoke channel, and a smoke outlet of the cooling unit is connected to the ignition unit.

35. The energy storage device as claimed in claim 26, wherein the smoke treatment apparatus comprises an adsorption unit arranged in or outside the box, and an ignition unit arranged outside the box, a smoke inlet of the adsorption unit is communicated with the shared pipeline assembly on each battery pack of the at least two battery packs through a smoke channel, and a smoke outlet of the adsorption unit is connected to the ignition unit.

36. The energy storage device as claimed in claim 26, wherein the smoke treatment apparatus comprises a cooling unit, an adsorption unit, and an ignition unit, the cooling unit and the adsorption unit are arranged in or outside the box, the ignition unit is arranged outside the box, a smoke inlet of the cooling unit is communicated with the shared pipeline assembly on each battery pack of the at least two battery packs through a smoke channel, a smoke outlet of the cooling unit is connected to a smoke inlet of the adsorption unit, and a smoke outlet of the adsorption unit is connected to the ignition unit.
